# EUROPÄISCHE PATENTSCHRIFT

(11) **EP 2 606 074 B1**
(45) Veröffentlichungstag und Bekanntmachung des Hinweises auf die Patenterteilung: **23.07.2014**
(21) Anmeldenummer: 11743777.2
(22) Anmeldetag: 03.08.2011
(51) Int. Cl.: C08F 2/44, C04B 24/32, C04B 26/06, C08L 71/02, C08G 65/332

(54) **HÄRTBARE POLYMERMISCHUNG**
CURABLE POLYMER MIXTURE
MÉLANGE POLYMÈRE DURCISSABLE

(30) Priorität: 18.08.2010 EP 10008607
(43) Veröffentlichungstag der Anmeldung: 26.06.2013
(73) Patentinhaber: BYK-Chemie GmbH, 46483 Wesel (DE)
(72) Erfinder: NAGELSDIEK, René, 46499 Hamminkeln (DE); GÖBELT, Bernd, 46487 Wesel (DE); GERTZEN, Bärbel, 46446 Emmerich (DE); BÖMER, Jörg, 46487 Wesel (DE); OMEIS, Jürgen, 46286 Dorsten-Lembeck (DE); REMME, Stephan, 47475 Kamp-Lintfort (DE); BIECKER, Christian, 46569 Hünxe (DE)
(86) Internationale Anmeldenummer: PCT/EP2011/003889
(87) Internationale Veröffentlichungsnummer: WO 2012/022436

(56) Entgegenhaltungen:
- WO-A1-03/080720
- WO-A1-2004/056445
- WO-A1-2008/049840
- WO-A1-2008/104378
- WO-A2-2010/020401

## Beschreibung

Die Erfindung betrifft eine Kompositzubereitung, ein Komposit sowie die Verwendung des Komposits.

Härtbare Polymermischungen, welche sog. Zuschlags- oder Füllstoffe enthalten, werden vielfältig verwendet, u. a. auch zur Herstellung von Polymerbeton und anderen Kompositmaterialien. Das Polymer wirkt als Bindemittel, welches die anorganischen Zuschlags- bzw. Füllstoffe, wie Gesteinskörnungen, zusammenhält. Letztere werden üblicherweise vom Feinstkornbereich bis zur Grobkörnung eingesetzt. Bezüglich der Qualität des ausgehärteten Kompositmaterials (dem Komposit als solchen), ist es wesentlich, dass es gute mechanische Eigenschaften aufweist. Je nach Anwendungsgebiet ist in diesem Zusammenhang zur Qualitätsverbesserung insbesondere die Biegefestigkeit, die Zugfestigkeit, die Druckfestigkeit, die Schlag-Biege-Festigkeit und/ oder der E-Modul zu optimieren. Eine derartige Optimierung basiert in der Praxis insbesondere auf dem Einsatz von Vermittleradditiven, die eine bessere Haftung zwischen Polymer und Füllstoff bewirken.

In "British Polymer Journal 1979, 11, 199" werden organofunktionelle Alkoxysilane als Vermittleradditive beschrieben, die in gefüllten Harzsystemen eingesetzt werden. Neben der als problematisch anzusehenden begrenzten Lagerstabilität von Alkoxysilanen, welche unter Abspaltung von Alkoholen, wie Methanol oder Ethanol, zur Hydrolyse neigen, ist ein weiterer Nachteil dieser Verbindungsklasse die Limitierung bezüglich des Einsatzes auf solche Füllstoffe, die mit Alkoxysilangruppen hinreichend gut reagieren.

Die JP 10183012 betrifft die Oberflächenbehandlung von Füllstoffen mit Salzen phosphorsaurer Verbindungen, welche Doppelbindungen enthalten und beschreibt somit einen weiteren Vermittleradditivtypen, welcher sich durch seine phosphorsauren Gruppen auszeichnet. Derartige Vermittleradditive haben jedoch den Nachteil, dass diese die in der Praxis typischerweise zur Härtung eingesetzten Katalysatorsysteme (z.B. Cobaltkomplexe oder aminische Katalysatoren) vergiften, wodurch die Aushärtung zum Komposit erheblich beeinträchtigt wird.

In "Journal of Material Research 2009, 24, 1553" wird der Einsatz von Mono-2-(methacryloxy)ethylsuccinat als Dispergiermittel für Siliciumcarbid-Nanopartikel in Vinylesterharzen beschrieben. Dieses Dispergiermittel hat auch Eigenschaften als "Kopplungsreagenz", welches jedoch die mechanischen Eigenschaften des Komposits nur in einem begrenzten Maße verbessert.

Die US 2005/165144 beschreibt Zubereitungen, in denen neben einem Kunststoffmaterial als Bindemittel und einem partikulären Füllstoff noch spezielle Modifikatoren enthalten sind. Letztere sind linearen Moleküle, welche jeweils endständige ethylenisch-ungesättigte Doppelbindungen sowie terminale Carbonsäuregruppen aufweisen, welche jeweils durch Alkylen- oder Alkenylen-Reste voneinander getrennt sind, wobei die Alkenylen-Reste optional noch mit einem durch ringöffnende Lactonpolymerisation zugänglichen Polyester-Rest verlängert vorliegen können. Als Beispiele für den Modifikator werden Carboxyalkylmaleimide sowie oligomere Esterverbindungen hervorgehoben. Die in der US 2005/165144 beschriebenen Modifikatoren haben den Nachteil, dass diese einerseits nicht besonders hydrolysestabil sind (insbesondere im Falle von größeren Molekülen, die entsprechend viele Estergruppen enthalten) und andererseits verhältnismäßig migrationsanfällig sind (insbesondere im Falle von kleineren Molekülen mit weniger Estergruppen).

Die WO 2008/049840 beschreibt Kompositionen, welche neben einem partikulären Füllstoff und einem als Bindemittel vorliegenden Kunststoff spezielle Modifikatoren enthalten. Letztere weisen mindestens eine lipophile Gruppe mit mindestens 6 C-Atomen auf, welche als Substituent eines von Bernsteinsäureanhydrid abgeleiteten Restes vorliegt. Als besagte lipophile Gruppe werden insbesondere langkettige Alkylreste oder Anhydrid-funktionelle Copolymere von Maleinsäureanhydrid oder Anhydrid-funktionelle Polyisobutylene vorgestellt. Ein Nachteil entsprechender Modifikatoren ist u.a., dass diese nur mit einer deutlich begrenzten Anzahl von Kunststoffsystemen verträglich sind.

Aufgabe der vorliegenden Erfindung war es, Füllstoffe sowie Bindemittel enthaltende Kompositvorprodukte bereitzustellen, welche zu Kompositen mit guten mechanischen Eigenschaften aushärtbar sind. Unter Gewährleistung dieser guten mechanischen Eigenschaften sollte möglichst eine große Variationsbreite von Bindemitteltypen einsetzbar sein. Außerdem sollten die Qualität der Komposite bzw. der Kompositkomponenten möglichst auch unter verhältnismäßig ungünstigen Bedingungen (z.B. Umstände, bei denen sich - ggf. auch über längere Zeiträume gesehen - "Hydrolysereaktionen" bemerkbar machen können), welche bei Verarbeitung (wesentlich ist die Einarbeitung der Komponenten und die Aushärtung) und Lagerung (Alterung) in der Praxis relevant sein können, zumindest weitgehend beibehalten werden.

Die Lösung dieser Aufgabe ist eine Kompositzubereitung enthaltend
i) 0,01 bis 10,00 Gew.% einer Vermittleradditivkomponente (A),
ii) 5 bis 94 Gew.% einer Füllstoffkomponente (B) sowie
iii) 5 bis 94 Gew.% einer Bindemittelkomponente (C),
wobei die Vermittleradditivkomponente (A) eine die Strukturelemente D, P und E enthaltende, gemäß der allgemeinen Formel (I) vorliegende chemische Struktur aufweist

(I) [D]ₐ P [E]_{b}

mit
D gleich oder verschieden sowie repräsentiert durch einen eine ethylenisch ungesättigte Doppelbindung aufweisenden Rest, bevorzugt ausgewählt aus der Gruppe umfassend (D-I), (D-II), (D-III) sowie (D-IV) 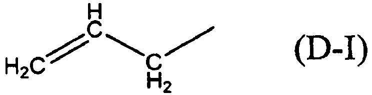 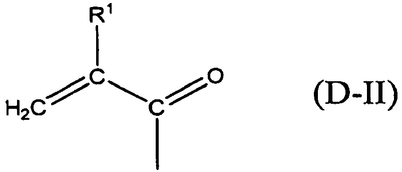 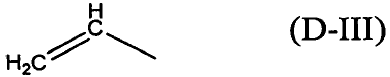 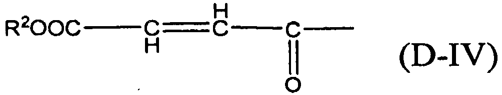 mit R¹ gleich oder verschieden sowie repräsentiert durch Wasserstoff oder CH₃ ; R² gleich oder verschieden sowie repräsentiert durch Wasserstoff oder einen verzweigten oder unverzweigten C₁-C₂₄-Alkylrest,
a gleich oder verschieden sowie repräsentiert durch eine ganze Zahl von 1 bis 50,
E gleich oder verschieden sowie repräsentiert durch Wasserstoff und/ oder einen eine COOH-Gruppe aufweisenden Rest, bevorzugt ausgewählt aus der Gruppe umfassend (B-I), (B-II), (B-III) sowie (B-IV)

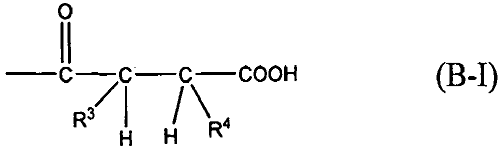

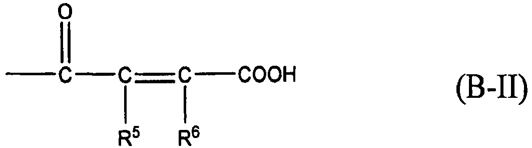

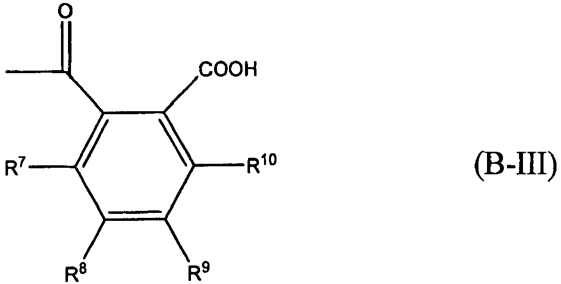

   -CH₂-COOH (B-IV)
mit R³ und R⁴ jeweils gleich oder verschieden sowie repräsentiert durch Wasserstoff oder einen verzweigten oder unverzweigten C₁-C₁₂-Alkylrest; R⁵ und R⁶ jeweils gleich oder verschieden sowie repräsentiert durch Wasserstoff oder einen verzweigten oder unverzweigten C₁-C₁₂-Alkylrest; R⁷, R⁸, R⁹ und R¹⁰ jeweils gleich oder verschieden sowie repräsentiert durch Wasserstoff, COOH oder einen verzweigten oder unverzweigten C₁-C₁₂-Alkylrest,
b gleich oder verschieden sowie repräsentiert durch eine ganze Zahl von 1 bis 50,
P gleich oder verschieden sowie repräsentiert durch einen verzweigten oder unverzweigten organischen Hauptrest, welcher mindestens zwei innerhalb dieses Hauptrestes nicht endständige Ethersauerstoffatome enthält,
wobei der P repräsentierende organische Hauptrest zusätzlich endständige Sauerstoffatome aufweist, die Strukturelemente D und E jeweils unmittelbar an diese endständigen Sauerstoffatome gebunden sind und maximal 70 Mol % der gesamten Strukturelemente E in der chemischen Struktur gemäß der allgemeinen Formel (I) durch H-Atome repräsentiert werden.

Falls b = 1 ist, liegt aufgrund der Bedingung, dass maximal 70 Mol % der gesamten Strukturelemente E in der chemischen Struktur gemäß der allgemeinen Formel (I) durch H-Atome repräsentiert werden, E nicht als Wasserstoff, sondern als ein eine COOH-Gruppe enthaltender Rest vor.

Die sich auf ein generisch definiertes Strukturelement, einen generisch definierten Rest oder eine Wiederholungseinheiten angebende Zahl beziehende Formulierung "gleich oder verschieden" soll regelmäßig bedeuten, dass entsprechende Variationsmöglichkeiten einerseits zwischen verschiedenen Molekülspezies und andererseits (insofern eine Variationsmöglichkeit innerhalb eines Moleküls überhaupt in Betracht kommt) auch innerhalb einer Molekülspezies bestehen.

Definitionsgemäß sollen keine Spezies der Füllstoffkomponente (B) zugerechnet werden, welche Spezies der Vermittleradditivkomponente (A) sind. Die Füllstoffkomponente (B) enthält anorganisches (bei Raum- und Verarbeitungstemperatur festes) Material, welches faserförmig und/ oder partikulär vorliegen sowie in die Kompositzubereitung eingebracht werden kann. Normalerweise besteht die Füllstoffkomponente (B) aus anorganischem Material. Zur Unterscheidung von "anorganisch" und "organisch" soll folgendes zugrundegelegt werden: Anorganische Materialien umfassen Elemente und Verbindungen, die jeweils keine kovalenten Kohlenstoff- Wasserstoffbindungen enthalten. Graphit ist demnach als anorganisches Material anzusehen. Polystyrol oder Glukose sind als Kohlenstoff - Wasserstoffbindungen enthaltende Spezies demnach jeweils organisch.

Die Bindemittelkomponente (C) setzt sich zusammen aus organischen Verbindungen (Kohlenstoff - Wasserstoffbindungen enthaltende Spezies), die sich jeweils als Bindemittel für Komposite eignen und nach der Aushärtung des Komposits (durch Polymerisation) Bestandteil einer sich im Komposit ausbildenden Polymermatrix sind. Hydraulische anorganische Bindemittel, wie Beton, sind somit beispielsweise nicht als Spezies der Bindemittelkomponente (C) anzusehen. Typischerweise liegt eine größere Teilmenge der Bindemittelkomponente (C) in Form von organischen Polymeren vor, welche nach der Aushärtung des Komposits (in aller Regel im Falle von Duromeren über Vernetzung und bei Thermoplasten über ein Erstarren) die Polymermatrix ausbilden. Häufig enthalten besagte Polymere Doppelbindungen (über welche diese einpolymerisierbar sind) oder sind Pfropfungsreaktionen zugänglich (insbesondere radikalischen Propfungsreaktionen - Übertragungsreaktionen). Die Polymerisation startenden Initiatoren sowie andere niedermolekulare Bestandteile, insbesondere während der Polymerisation einpolymerisierte Monomere, die nach der Aushärtung des Komposits (nach der Polymerisation) Bestandteil der Polmermatrix sind (also kovalent gebunden in der Polymermatrix vorhanden sind), sind ebenfalls der Bindemittelkomponente (C) zuzurechnen. Verbindungen, die der Vermittleradditivkomponente (A) oder der Füllstoffkomponente (B) zugehörig sind, sollen rein definitionsgemäß nicht als Verbindungen der Bindemittelkomponente (C) angesehen werden, obwohl Verbindungen der Vermittleradditivkomponente (A) nach der Aushärtung zum Komposit typischerweise als in die Bindemittelpolymermatrix einpolymerisierte Struktureinheiten vorliegen.

Durch Aushärtung der erfindungsgemäßen Kompositzubereitung lassen sich Komposite mit besonders guten mechanischen Eigenschaften herstellen. Unter zumindest weitgehender Gewährleistung dieser guten mechanischen Eigenschaften kann außerdem das Bindemittel aus einer verhältnismäßig großen Variationsbreite von Bindemitteltypen ausgewählt werden. Einen wesentlichen Beitrag dazu leistet die erfindungsgemäß enthaltene Vermittleradditivkomponente (A). Weiterhin verursacht die Vermittleradditivkomponente (A) keine unerwünschten Beeinträchtigungen bei der Verarbeitung und Aushärtung der Kompositzubereitung. Die Vermittleradditivkomponente (A) weist außerdem (wahrscheinlich zumindest auch aufgrund des verhältnismäßig hohen Molekulargewichts) eine geringe Flüchtigkeit/ Migrationsneigung auf, was sich u.a. positiv bezüglich Gesundheitssowie Umweltverträglichkeit, Oberflächeneigenschaften des fertigen Komposits, Handhabung und Wirtschaftlichkeit (es geht weniger verloren) bemerkbar macht. Außerdem sollte erwähnt werden, dass die Vermittleradditivkomponente (A) als verhältnismäßig "robust" anzusehen ist und eine recht hohe Beständigkeit bei Verarbeitung und Lagerung (Alterung), insbesondere gegenüber den in der Praxis häufig relevanten Hydrolysereaktionen, zeigt.

Es sollte erwähnt sein, dass die erfindungsgemäße Vermittleradditivkomponente (A) im Vergleich zu den vorstehend im Zusammenhang mit der chemischen Struktur der Vermittleradditivkomponente (A) dargestellten funktionellen Gruppen noch andere Typen von funktionellen Gruppen enthalten kann. Häufig ist es bevorzugt, dass die Spezies der Vermittleradditivkomponente (A) jeweils nicht weniger Ethersauerstoffatome als solche funktionelle Gruppen enthalten, die besagten anderen Typen von funktionellen Gruppen zuzurechnen sind. Solche anderen Typen von funktionellen Gruppen der Vermittleradditivkomponente (A) können beispielsweise dadurch erzeugt werden, wenn endständige OH-Gruppen (diese liegen insbesondere dann vor, wenn eine Teilmenge des Strukturelements E durch Wasserstoff repräsentiert wird) umgesetzt werden, beispielsweise durch Veresterung, Veretherung oder Urethangruppenbildung. Durch entsprechende Umsetzungen lassen sich somit organische Reste, insbesondere auch oligomere und polymere Kettensegmente von hoher bis niedriger Polarität, an das Hauptmolekül addieren.

In einer bevorzugten Ausführungsform enthält die erfindungsgemäße Kompositzubereitung
i) 0,1 bis 4,0 Gew.% der Vermittleradditivkomponente (A),
ii) 15 bis 84 Gew.% der Füllstoffkomponente (B) sowie
iii) 15 bis 84 Gew.% der Bindemittelkomponente (C).

Üblicherweise enthält die erfindungsgemäße Kompositkomposition sog. Hilfsstoffe, welche der Füllstoffkomponente (B) (z.B. anorganische, eine basische Oberfläche aufweisende Pigmentpartikel zur Einfärbung des Komposits), der Bindemittelkomponente (C) (z.B. Initiator, der nach der Initiierung der Polymerisation ein Strukturelement der sich ausbildenden Polymermatrix wird) oder keiner dieser beiden Komponenten zuzurechnen sind (z.B. inerte, flüchtige Lösungsmittel). Hilfsstoffe dienen insbesondere der leichteren Verarbeitbarkeit, der Qualitätsverbesserung des Endprodukts, der Stabilisierung und der Aushärtung.

Die der Vermittleradditivkomponente (A) zugehörigen Verbindungspezies können jeweils verzweigt oder linear vorliegen. Die verzweigten Spezies mit Verzweigungsstellen im Strukturelement P enthalten üblicherweise mehr als ein endständiges Strukturelement E und/oder mehr als eine teminales Strukturelement D.

Eine bevorzugte Ausführungform der Erfindung verwirklicht, daß in der die chemischen Struktur der Vermittleradditivkomponente (A) beschreibenden allgemeinen Formel (I) D bevorzugt als (D-II) und/ oder (D-IV) vorliegt, a durch eine ganze Zahl von 1 bis 8 repräsentiert wird, der die COOH-Gruppe aufweisende Rest bevorzugt als (B-I) und/ oder (B-II) vorliegt, b durch eine ganze Zahl von 1 bis 15 repräsentiert wird, wobei maximal 50, bevorzugt maximal 30, besonders bevorzugt maximal 15 Mol% der gesamten Strukturelemente E in der chemischen Struktur gemäß der allgemeinen Formel (I) durch H-Atome repräsentiert werden und der P repräsentierende organische Hauptrest ein Molekulargewicht von wenigstens 200 aufweist sowie mindestens zwei der innerhalb des Hauptrestes nicht endständigen Ethersauerstoffatome über ein verbrückendes lineares C₂-C₅-Alkylengruppensegment einer unverzweigten oder verzweigten Alkylengruppe miteinander verbunden sind (falls diese Alkylengruppe unverzweigt ist, besteht diese aus dem verbrückenden linearen C₂-C₅-Alkylengruppensegment).

Bevorzugt liegt die Gesamtmenge oder eine Teilmenge der Vermittleradditivkomponente (A) in Form von Verbindungen (A') vor, in denen der das Strukturelement P repräsentierende organische Hauptrest Struktureinheiten aufweist, welche durch ringöffnende Polymerisation von 3 bis 6 Ringatome enthaltenden zyklischen Ethern erhältlich sind, wobei der organische Hauptrest optionalerweise zusätzlich weitere Struktureinheiten aufweist, die durch ringöffnende Polymerisation von 5 bis 7 Ringatomen enthaltenden Lactonen herstellbar sind.

Meist weisen besagte Verbindungen (A') jeweils Struktursegmente der allgemeinen Formel (II) auf 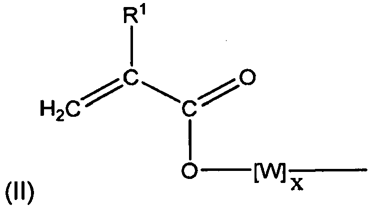 mit
R¹ gleich oder verschieden sowie repräsentiert durch H oder CH₃
W gleich oder verschieden sowie repräsentiert durch eine sich wiederholende Struktureinheit,
x gleich oder verschieden sowie repräsentiert durch eine ganze Zahl von 3 bis 100,
wobei die sich wiederholende Struktureinheit W erhältlich ist durch ringöffnende Polymerisation eines zyklischen Ethers, ausgewählt aus der Gruppe umfassend (W-I), (W-II), (W-III), (W-IV) sowie (W-V) 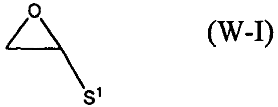 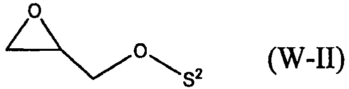 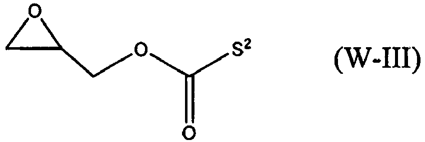 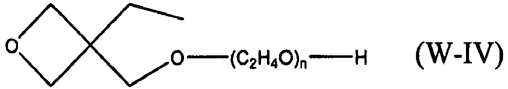 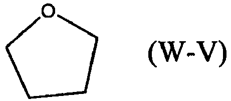 mit
S¹ gleich oder verschieden sowie repräsentiert durch H, einen linearen oder verzweigten C₁ bis C₂₄-Alkylrest, einen C₆ bis C₁₈-Arylrest, oder einen C₆ bis C₁₈- Arylalkylrest, bevorzugt repräsentiert durch H, CH₃, C₂H₅ oder C₆H₅,
S² gleich oder verschieden sowie repräsentiert durch H, einen linearen oder verzweigten C₁ bis C₂₄-Alkylrest, einen C₆ bis C₁₈-Arylrest, oder einen C₆ bis C₁₈- Arylalkylrest, bevorzugt repräsentiert durch H, C₉ bis C₁₈-Alkyl- oder C₆H₅,
n gleich oder verschieden sowie repräsentiert durch eine ganze Zahl von 0 bis 10.

Die ringöffnende Polymerisation von cyclischen Ethern ist allgemein bekannt und wird beispielsweise in "K. J. Ivin, T. Saegusa (Hrg.), "Ring-opening Polymerization", Band 1, Kapitel 4: "cyclic Ethers" (Autoren: S. Inoue, T. Aida), Elsevier Applied Science Publishers, London/New York 1984" beschrieben. Ebenso ist die Polymerisation von cyclischen Estern (Lactonen) bekannt und wird beispielsweise in "K. J. Ivin, T. Saegusa (Hrg.), "Ring-opening Polymerization", Band 1, Kapitel 7: "Lactones" (Autoren: D. B. Johns, R. W. Lenz, A. Luecke), Elsevier Applied Science Publishers, London/New York 1984" beschrieben.

Die erfindungsgemäßen Vermittleradditivkomponente (A) bzw. die Spezies der Vermittleradditive (A') können auf verschiedenen Wegen hergestellt werden. Insbesondere zur Einführung des Strukturelements D und zur Verknüpfung des Strukturelements E bieten sich jeweils verschiedene Möglichkeiten.

Bevorzugt ist die Vermittleradditivkomponente (A) herstellbar mittels eines die Schritte i) sowie ii) aufweisendes Verfahrens, in welchem
in Schritt i) hydroxyfunktionelle Vorprodukte durch ringöffnende Polymerisation von optionalerweise durch Hydroxylgruppen substituierten Oxetanen erzeugt werden, wobei die ringöffnende Polymerisation unter Umsetzung einer mindestens eine Hydroxylgruppe aufweisenden, ethylenisch-ungesättigten Verbindung erfolgt und
in Schritt ii) die hydroxyfunktionellen Vorprodukte mit cyclischen Carbonsäureanhydriden umgesetzt werden.

In der Regel liegen die in Schritt i) eingesetzten Oxetane jeweils in Form von durch Hydroxylgruppen substituierten Oxetanen vor, wobei für die in Schritt i) verwendeten mindestens eine Hydroxylgruppe aufweisenden, ethylenisch-ungesättigten Verbindungen vorzugsweise Hydroxyalkyl(meth)acrylatderivate und/ oder Allylalkoholderivate gewählt werden und die in Schritt ii) eingesetzten zyklischen Carbonsäureanhydride normalerweise als zyklisch aliphatische, mindestens 4 Kohlenstoffatome enthaltende Carbonsäuranhydride vorliegen.

Bevorzugt werden die Hydroxyalkyl(meth)acrylatderivate repräsentiert durch Hydroxyalkyl(meth)acrylat als solches und/ oder mittels Alkoxylierung von Hydroxyalkyl(meth)acrylat herstellbaren, maximal 20 Alkoxystruktureinheiten enthaltenden Etherspezies, bevorzugt durch Hydroxyalkyl(meth)acrylat als solches und meist liegen die Allylalkoholderivate in Form von Allylalkohol als solches und/ oder mittels Alkoxylierung von Allylalkohol herstellbaren, maximal 20 Alkoxystruktureinheiten enthaltenden Etherspezies vor. Allylalkohol als solches und/ oder Alkoxylierungsprodukte von Allylalkohol mit 1 bis 9 von Ethylen- und/oder Propylenoxid abgeleiteten Struktureinheiten sind die besonders bevorzugten Allylalkoholderivate.

Eventuell können Spezies der Vermittleradditivkomponente (A) neben den Struktureinheiten, die aufgrund der ringöffnenden Polymerisation von cyclischen Ethern resultieren, weitere Struktureinheiten enthalten, welche durch ringöffnende Polymerisation von Lactonen zugänglich sind oder durch Polykondensation unter Beteiligung von Hydroxycarbonsäuren erzeugt werden. Es ist bekannt, dass Struktureinheiten, welche formal durch Ringöffnung eines Lactons, d.h. eines cyclischen Esters, zugänglich sind, analog auch durch einen unter Wasserabspaltung stattfindenden Kondensationschritt mit einer entsprechenden Hydroxycarbonsäure zugänglich sind. Im Bereich von hydroxyfunktionellen Carbonsäuren ist auch die Verwendung von multifunktionellen Verbindungen, d.h. Verbindungen mit mehr als einer OH- und/oder mehr als einer COOH-Gruppe möglich, wie Zitronensäure, Bis(hydroxymethyl)propionsäure oder Äpfelsäure. Mit Lactonen sollen auch die cyclischen Ester der Kohlensäure, also z.B. Ethylencarbonat, Propylencarbonat oder Glycerincarbonat umfasst sein. Bevorzugt sind in diesem Zusammenhang Struktureinheiten, die sich von Lactonen mit 5, 6 oder 7 Ringatomen ableiten, insbesondere Struktureinheiten, die sich von ε-Caprolacton oder δ-Valerolacton ableiten.

Es ist bekannt, dass entsprechende oligomere oder polymere Strukturen mit terminaler Doppelbindung und terminaler OH-Gruppe auch kommerziell als Rohstoff erhältlich sind. Besonders verbreitet sind dabei Strukturen, die eine endständige Allyloxy-, Acryloloxy- oder Methacryloyloxygruppe tragen, die über die Ether- bzw. Estergruppe mit einem Polyoxiran (bevorzugt basierend auf Ethylenoxid und/oder Propylenoxid) oder Poly(tetrahydrofuran) verbunden sind. Diese können z.B. bei der NOF unter dem Handelsnamen "Blemmer" bzw. "Uniox" oder bei der Cognis unter dem Namen "Bisomer" oder bei der Cray Valley unter dem Namen "Sartomer" oder bei der Rhodia als "Sipomer" als Varianten mit unterschiedlichsten Molekulargewichten und Monomerzusammensetzungen erworben werden.

Es ist möglich, daß derartige Präpolymere mit terminaler Doppelbindung und terminaler OH-Gruppe durch weitere ringöffnende Polymerisation mit cyclischen Ethern oder Lactonen kettenverlängert werden, bevor eine weitere Umsetzung zu Strukturen mit endständingen Carbonsäuregruppen erfolgt. Ebenso ist die Herstellung von verzweigten oligomeren oder polymeren Strukturen mit terminalen Doppelbindungen und mehreren terminalen OH-Gruppen auf Basis von Glycidol bekannt. Auch derartige Verbindungen können zur Herstellung der Vermittleradditivkomponente (A) eingesetzt werden.

Nach der ringöffnenden Polymerisation von cyclischen Polyethern, ggf. in Kombination mit der ringöffnenden Polymerisation von Lactonen bzw. der Polykondensation von Hydroxycarbonsäuren, mit ungesättigten hydroxyfunktionellen Verbindungen als Reaktionspartner erhält man ein Oligomer bzw. Polymer, welches neben einer ungesättigten Endgruppe auch über mindestens eine terminale OH-Gruppe verfügt. Diese OH-Gruppe lässt sich nun in eine Carbonsäurefunktion überführen.

Die Einführung von terminalen carbonsauren Gruppen in hydroxyfunktionelle Verbindungen durch Umsetzung von deren OH-Gruppen mit cyclischen Carbonsäureanhydriden oder durch Carboxymethylierung ist dem Fachmann bekannt. In einer besonders bevorzugten Variante wird die terminale carbonsaure Gruppe durch Umsetzung der OH-Funktion mit einem cyclischen Carbonsäureanhydrid durchgeführt. Besonders bevorzugte Carbonsäureanhydride stellen hierbei Bernsteinsäureanhydrid, Maleinsäureanhydrid, Phthalsäureanhydrid und Trimellithsäureanhydrid sowie ggf. deren Derivate dar. Methoden zur Einführung von terminalen carbonsauren Gruppen in hydroxyfunktionelle Verbindungen durch Umsetzung von deren OH-Gruppen mit cyclischen Carbonsäureanhydriden sind z.B. in "Polymer Bull. (Berlin), 1980, 3, 347" dargestellt.

Als eine alternative bevorzugte Herstellmethode der Vermittleradditivkomponente (A) soll die ringöffnende Polymerisation genannt werden, bei der eine mindestens difunktionelle hydroxyfunktionelle Verbindung als Startmolekül gewählt wird. Bevorzugte Startmoleküle stellen in diesem Fall Polyether, wie Polyethylenglykol oder Polypropylenglykol, dar. Als Monomere, die sich für die ringöffnende Polymerisation eignen, sind cyclische Ether mit drei bis fünf Ringatomen bevorzugt. Besonders bevorzugte Monomere sind die vorstehend bereits genannten cyclischen Ether, ggf. in Kombination mit entsprechenen Lactonen bzw. Hydroxycarbonsäuren.

Wie bereits gesagt, können neben Struktureinheiten, welche sich von diesen cyclischen Ethern ableiten, auch solche Struktureinheiten vorhanden sein, die durch ringöffnende Polymerisation von Lactonen zugänglich sind bzw. durch Polykondensation unter Beteiligung entsprechender Hydroxycarbonsäuren. Derart geeignete Hydroxycarbonsäuren können auch mehr als eine OH-Gruppe und/oder mehr als eine COOH-Gruppe aufweisen. Mit Lactonen sollen auch die cyclischen Ester der Kohlensäure, also z.B. Ethylencarbonat, Propylencarbonat oder Glycerincarbonat umfasst sein. Bevorzugt sind in diesem Zusammenhang Struktureinheiten, die sich von Lactonen mit 5, 6 oder 7 Ringatomen ableiten, insbesondere Struktureinheiten, die sich von ε-Caprolacton oder δ-Valerolacton ableiten.

Auf diesem Wege erhält man Oligomere bzw. Polymere, welche mindestens 2 OH-Gruppen pro Molekül aufweisen. Die weitere Umsetzung dieser Moleküle besteht nun darin, dass man einen Teil dieser OH-Gruppen analog zum vorstehend beschriebenen Verfahren in Carboxylgruppen überführt und einen weiteren Teil der OH-Gruppen durch geeignete Reaktion in ein endständiges Strukturelement D, welches eine ethylenisch-ungesättigte Doppelbindung enthält, überführt. Die Reaktionsreihenfolge zur Einführung dieser Endgruppen ist beliebig und den jeweiligen synthetischen Rahmenbedingungen anzupassen. Es können also sowohl zuerst die endständige Strukturelemente D und dann die carbonsauren Gruppen eingeführt werden als auch umgekehrt bzw. auch simultan.

Um eine endständige OH-Gruppe in ein endständiges Strukturelement D zu überführen, bieten sich die dem Fachmann bekannten üblichen Methoden an. Bevorzugte Methoden sind die Umsetzung der OH-Gruppe mit (Meth)acrylsäure, deren Estern, Halogeniden oder Anhydriden zu (Meth)acryloyl-Endgruppen, die Alkylierung mit Allyl- oder Vinylhalogeniden zu Allylether- oder Vinylether-Endgruppen, die Umsetzung mit Maleinsäure, deren Anhydrid oder (Halb)estern bzw. die Umsetzung mit Fumarsäure oder deren (Halb)estern zu entsprechenden ungesättigten Estergruppen.

In Abwandlung dieser Variante kann als Herstellmethode der Vermittleradditivkomponente (A) auch die ringöffnende Polymerisationen genannt werden, bei der eine *monofunktionelle* hydroxyfunktionelle Verbindung als Startmolekül gewählt wird, unter der Voraussetzung, dass durch geeignete Wahl der ringöffnend zu polymerisierenden Monomere verzweigte Strukturen mit mindestens zwei Hydroxygruppen pro Molekül entstehen. Bevorzugte Startmoleküle stellen in diesem Fall monohydroxyfunktionelle Polyether, wie Polyethylenglykolmonomethylether, Polypropylenglykolmonobutylether, gemischte Polyethylenoxid-/Polypropylenoxidmonoalkylether oder sog. Fettalkohol-Alkoxylate (d.h. Alkoxylate von C₆-C₂₄-Monoalkoholen) dar. Als Monomere, die sich für die ringöffnende Polymerisation eignen, sind auch in diesem Fall cyclische Ether mit drei bis fünf Ringatomen bevorzugt. Besonders bevorzugte Monomere sind die vorstehend bereits genannten cyclischen Ether, ggf. in Kombination mit entsprechenen Lactonen bzw. Hydroxycarbonsäuren. Für die weitere Umsetzung und insbesondere die Einführung des endständigen Strukturelements D gilt das vorstehend Gesagte.

Bevorzugt liegt mindestens 60 Gew.% der Füllstoffkomponente (B) in Form von Füllstoffkomponentenspezies (B') vor, die jeweils gemäß der DIN EN ISO 787-9 einen pH-Wert von mindestens 6,0 , bevorzugt von mindestens 7,5 aufweisen.

In der Regel liegt mindestens 60 Gew.% der Füllstoffkomponente (B) in Form von Füllstoffkomponentenspezies (B') vor, welche jeweils aufweisen Carbonate, Hydrogencarbonate, Sulfate und/oder Hydrogensulfate der Elemente Calcium, Magnesium und/oder Aluminium; und/ oder Oxide, Hydroxide und/ oder Oxidhydroxide des Aluminiums; und/ oder Glimmer und/ oder Alumosilicate und/ oder Talkum und/oder Kieselsäuren.

Es ist bekannt, dass diese Verbindungen in der Natur in der Regel nicht chemisch 100%-ig rein vorkommen, so dass ein nicht unbeachtlicher Anteil der Kationen bzw. Anionen in diesen Verbindungen jeweils durch andersartige Metallkationen bzw. Anionen substituiert sein können. Neben natürlichen Füllstoffen können auch synthetisch hergestellte, d.h. in der Regel durch Fällungsreaktionen oder pyrogene Verfahren gewonnene Füllstoffe, eingesetzt werden.

Die Spezies der Füllstoffkomponente (B) zeichnen sich bevorzugt dadurch aus, dass diese in den Matrixmaterialien verteilbar, d. h. multipartikulär angeordnet werden können und darin nicht löslich sind. Alternativ bzw. zusätzlich kann die Füllstoffkomponente (B) einen im Matrixmaterial nicht löslichen, faserförmigen Bestandteil enthalten. Als verteilbare anorganische Füllstoffe sind beispielsweise einsetzbar: Anorganische, siliziumhaltige Verbindungen, beispielsweise Quartz, Cristobalit, pyrogene Kieselsäuren, gefällte Kieselsäuren, Wollastonit, Kaolin, Siliciumcarbid, Glimmer, Talk, vorzugsweise als Gesteinskörnungen in allen Kornbereichen, d. h. von Feinstkornbereich bis zu einer groben Gesteinskörnung, siliziumhaltige Verbindungen in Form geschnittener und kontinuierlicher Fasern (wobei die kontinuierliche Faserform auch Faserstränge, Faserbündel, Gewebe und Gelege umfasst und die kontinuierlichen faserförmigen Füllstoffe ggf. auch in Kombination mit den partikulären Füllstoffen eingesetzt werden können), sowie in Form von Kugeln und Hohlkugeln, sauerstoffhaltige anorganische Verbindungen von Magnesium, Calcium, Barium (wie deren ggf. gemischte Carbonate, Hydrogencarbonate, Sulfate, Hydrogensulfate, Phosphate, (Di)Hydrogenphosphate, Oxide, Hydroxide, u. a. auch als Marmorkörnung, Kreide, Kalkstein, Dolomit, Gips, Magnesiumhydroxid), anorganische Aluminiumverbindungen, vorzugsweise Aluminiumhydroxid (z.B. Hydrargillit oder Gibbsit), Aluminiumoxide (z. B. Korund, Schmirgel) sowie Aluminiumoxidhydroxide (z.B. Bauxit, Böhmit, Diaspor) und/ oder Kohlenstofffasern sowie Kohlenstoffnanoröhren.

Die Füllstoffe können auch oberflächenmodifiziert sein.

Meist werden partikuläre oder pulverförmige Füllstoffe eingesetzt. Die Korngrößendurchmesser (im Fall von Partikeln) betragen typischerweise 50 nm bis 5 cm, häufig 100 nm bis 2 cm, besonders häufig 1 µm bis 1 cm und ganz besonders häufig 10 µm bis 5 mm.

Die Bindemittelkomponente (C) enthält häufig mindestens 60 Gew.% mittels radikalischer
Polymerisation und/oder radikalischer Vernetzung aushärtbare Duromervorprodukte (C'), welche ausgewählt sind aus der Gruppe bestehend aus ethylenisch ungesättigte Polymere, (Meth)acrylharze, ethylenisch ungesättigten Monomere, radikalische Initiatoren und optionalerweise Vernetzer.

In einer typischen Ausführungsform der Erfindung enthält die Bindemittelkomponente (C) zu zu mindestens 90 Gew. % Polymermatrixvorprodukt, welches aus folgenden Bestandteilen besteht:
- (Meth)acrylharze und/ oder ungesättigte Polyesterharze,
- ethylenisch ungesättigte Monomere, vorzugsweise Styrol, substituierte Styrole, (Meth)acrylate und/ oder (Meth)acrylamide,
- sich als Radikalinitiator eignende Spezies, bevorzugt Peroxidverbindungen und
- optionalerweise Vernetzer ausgewählt aus di-, tri- und höherfunktionellen (Meth)acrylaten, Di-, Tri- und Polyvinyl-substituierten Benzolderivaten, di-, tri- und höherfunktionellen Vinyl- oder Allyl(poly)ethern.

Die polymeren Bindemittel bilden die Polymermatrix aus, in der die Füllstoffe verteilt sind. Diese Bindemittel härten typischerweise entweder durch radikalische Prozesse unter Beteiligung von ethylenisch-ungesättigten Verbindungen aus (Duromere) oder es handelt sich um Thermoplaste, bei denen unter den jeweiligen Verarbeitungsbedingungen Pfropfungsreaktionen in Gegenwart von Radikalen stattfinden. Geeignete Thermoplast-Bindemittel sind Homo- und Copolymere von α-Olefinen, die im Rahmen ihrer Verarbeitung, beispielsweise in Extrudern, mit ethylenisch ungesättigten Verbindungen ggf. in Gegenwart von Radikalstartern im Rahmen von Pfropfungsreaktionen reagieren.

Bevorzugte polymere Spezies der Bindemittelkomponente (C) sind Duromere. Besonders häufig eingesetzte Spezies der Bindemittelkomponente sind (Meth)acrylatharze, welche gelegentlich auch als Methacrylat/ Acrylat-Reaktionsharze bezeichnet werden, sowie die ungesättigten Polyesterharze, zu welchen auch die sog. Vinylesterharze zugerechnet werden sollen. Ethylenisch ungesättigte Polyesterharze werden bevorzugt durch Umsetzung von einfach ungesättigten Dicarbonsäuren mit Diolen, ggf. auch unter Mitverwendung von gesättigten Carbonsäuren oder (Di)cyclopentadien, erhalten. Besonders bevorzugte dafür verwendete bifunktionelle, ethylenisch ungesättigte Carbonsäuren bzw. deren Derivate sind Maleinsäure und Fumarsäure sowie Maleinsäureanhydrid. Als bifunktionelle gesättigte Carbonsäurekomponente können jedoch zusätzlich auch Adipinsäure, Tetrahydrophthalsäure, Phthalsäure, Isophthalsäure, Terephthalsäure, HET-Säure (Hexachlor-endomethylen-tetrahydrophthalsäure) und Glutarsäure sowie die Anhydride dieser Carbonsäuren oder Diels-Alder-Addukte aus Maleinsäureanhydrid und Cyclopentadien mit verwendet werden. Bei der Herstellung von ungesättigten Polyesterharzen können auch Acrylsäure und Methacrylsäure mit eingesetzt werden. Zur Umsetzung kommen als bifunktionelle Alkoholkomponente vorzugsweise Propylen-, Dipropylen-, Ethylen-, Diethylen- und Neopentylglykol, sowie 1,4-Butandiol, 1,6-Hexandiol, alkoxyliertes Bisphenol A und 2,2,4-Trimethylpentan-1,3-diol in Frage.

Neben den bisfunktionellen Carbonsäuren und Alkoholen können auch höherfunktionelle Carbonsäuren und Alkohole einsetzt werden, um verzweigte Polykondensationsprodukte zu erhalten.

Gut geeignete ungesättigte Polyesterharze sind auch Vinylesterharze, welche durch Umsetzung von Epoxy-Harzen mit ungesättigten Monocarbonsäuren, z.B. (Meth)acrylsäure, zugänglich sind.

Als besonders geeignete Polymere für das radikalisch zu polymerisierende System sollen ferner erwähnt werden (Meth)acrylharze, wie Poly(meth)acrylate, Poly(meth)acrylamide oder Copolymere aus (Meth)acrylaten/(Meth)acrylamide. Für diese Polymerbasis können bekannte Vernetzerverbindungen, bevorzugt di-, tri- und höherfunktionelle (Meth)acrylate, z.B. Ethylenglycoldi(meth)acrylat, Propylenglycoldi(meth)acrylat, 1,4-Butandioldi(meth)acrylat, 1,6-Hexandioldi(meth)acrylat, Diethylenglycoldi(meth)acrylat, Dipropylenglycoldi(meth)acrylat, Glycerintri(meth)acrylat, Trimethylolpropantri(meth)acrylat, Triethylenglycoldi(meth)acrylat, Tripropylenglycoldi(meth)acrylat, vorzugsweise in Mengen bis zu 7,5 Gew.%, bevorzugt bis zu 5 Gew.%, bezogen auf das Gesamtgewicht der Bindemittelkomponente, zusätzlich eingesetzt werden.

Darüber hinaus enthält die Bindemittelkomponente typischerweise mindestens ein ethylenisch ungesättigtes Monomer, vorzugsweise ggf. substituierte Styrole, (Meth)acrylate, (Meth)acrylamide oder deren Mischungen, vorzugsweise in einer Menge von bis zu 55 Gew.%, besonders bevorzugt bis zu 45 Gew.%, bezogen auf das Gesamtgewicht der Bindemittelkomponente.

Häufig enthält die Bindemittelkomponente (C) spezielle Methacrylat/ Acrylat-Reaktionsharze, welche als Komponententypen aufweisen:
- eine Polymerkomponente: Typischerweise Copolymere mit hohem Anteil an Methylmethacrylat, welches mit Alkyl(meth)acrylaten, wie Methylacrylat, Ethyl(meth)acrylat, Butyl(meth)acrylat, 2-Ethylhexyl(meth)acrylat copolymerisiert wurde (diese Copolymere werden bevorzugt durch Substanz- oder Perlpolymerisation hergestellt und weisen meist gewichtsmittlere Molekulargewichte zwischen 50.000 und 1.000.000 auf),
- ein oder mehrere (meth)acrylischen Monomere, wie Methyl(meth)acrylat, Butyl(meth)acrylat, 2-Hydroxyethyl(meth)acrylat, 2-Ethylhexyl(meth)acrylat, 3,3,5-Trimethylcyclohexyl(meth)acrylat und
- ein oder mehrere (meth)acrylische Vernetzer, wie Ethylenglykoldi(meth)acrylat, 1,4-Butandioldi(meth)acrylat, Polyethylenglycoldi(meth)acrylat, Polypropylenglycoldi(meth)acrylat, Trimethylolpropantri(meth)acrylat und/ oder poly(meth)acrylfunktionelles Polyurethan(meth)acrylat.

Es ist bekannt, dass durch eine geeignete Zusammenstellung dieser besagten Komponententypen das Eigenschaftsprofil (des erhaltenen Duroplasts) wie gewünscht variiert werden kann. Wesentliche Kriterien in diesem Zusammenhang sind u. a. der Aushärtungsschwund, die mechanischen Eigenschaften, die Oberflächenhaftung, die innere Weichmachung, der Vernetzungsgrad und der Geruch sowie die Rheologie des noch nicht ausgehärteten Bindemittelsystems.

Als alternatives polymeres Bindemittel kommen Thermoplaste in Frage, welche unter den gewählten Verarbeitungsbedingungen im Rahmen von radikalischen Reaktionen mit ethylenisch-ungesättigten Verbindungen reagieren können. In der Regel handelt es sich dabei um Homo- und Copolymere von α-Olefinen mit 2 bis 12 C-Atomen, typischerweise um die Homo- und Copolymere des Ethylens und des Propylens.

Die Erfindung betrifft außerdem ein Komposit, welches durch Härtung der vorstehend beschriebenen Kompositzubereitung erhältlich ist.

Für die Polymerisation der Bindemittelkomponente werden in der Regel Radikalstarter eingesetzt. Als Radikalstarter eignen sich insbesondere organische Peroxide und Azoverbindungen, bevorzugt organische Peroxide. Die Auswahl des Radikalstarters erfolgt vorzugsweise entsprechend der Härtungstemperatur. Vorzugsweise werden als Radikalstarter Methylethylketonperoxid, Dibenzoylperoxid, Laurylperoxid, Dicumylperoxid, Cumenhydroperoxid, t-Butylperbenzoat, 1,1-Di-(t-butylperoxy)-3,3,5-Trimethylcyclohexan eingesetzt. Weitere geeignete Radikalstarter sind beispielsweise Diisobutyrylperoxid, Cumylperoxyneodecanoat, 1,1,3,3-Tetramethylbutyl peroxyneodecanoat, Di-n-propyl-peroxydicarbonat, tert-Amylperoxyneodecanoat, Di-(4-tert-butyl-cyclohexyl)-peroxydicarbonat, Di-(2-ethylhexyl)-peroxydicarbonat, tert-Butylperoxyneodecanoat, Di-n-butylperoxydicarbonat, Dicetylperoxydicarbonat, Dimyristylperoxydicarbonat, 1,1,3,3-Tetramethylbutylperoxypivalat, tert-Butylperoxyneoheptanoat, tert-Amylperoxypivalat, tert-Butylperoxypivalat, Di-(3,5,5-trimethylhexanoyl)-peroxid, Dilauroylperoxid, Didecanoylperoxid, 2,5-Dimethyl-2,5-di(2-ethylhexanoylperoxy)-hexan, 1,1,3,3-Tetramethylbutylperoxy-2-ethylhexanoat,tert-Amylperoxy-2-ethylhexanoat, tert-Butylperoxy-2-ethylhexanoat, tert-Butylperoxydiethylacetat, tert-Butylperoxyisobutyrat, 1,1-Di-(tert-butylperoxy)-3,3,5-trimethylcyclohexan, 1,1-Di-(tert-butylperoxy)-cyclohexan, tert-Amylperoxy-2-ethylhexylcarbonat, tert-Butylperoxy-3,5,5-trimethylhexanoat, 2,2-Di-(tert-butylperoxy)-butan, tert-Butylperoxyisopropylcarbonat, tert-Butylperoxy-2-ethylhexylcarbonat, tert-Butylperoxyacetat, tert-Butylperoxybenzoat, Di-tert-amylperoxid, Di-(2-tert-butyl-peroxyisopropyl)-benzol, 2,5-Dimethyl-2,5-di-(tert-butylperoxy)-hexan, tert-Butylcumyl peroxid, 2,5-Dimethyl-2,5-di(tert-butylperoxy)hexin-3, Di-tert-butyl peroxid, 3,6,9-Triethyl-3,6,9-trimethyl-1,4,7-triperoxonane, Di-isopropylbenzol-monohydroperoxid, p-Menthanhydroperoxid, Cumylhydroperoxid, 1,1,3,3-Tetramethylbutylhydroperoxid, tert-Butylhydroperoxid, tert-Amylhydroperoxid, Methylisobutylketonperoxid, Acetylacetonperoxid, Cyclohexanonperoxid sowie auch sonstige Perketal-Peroxide, Perester-Peroxide sowie Peroxycarbonate und Mischungen dieser Radikalstarterspezies.

Je nach Härtungsbedingungen kann ggf. ein "üblicher" Beschleuniger mit eingesetzt werden, damit eine radikalische Polymerisation und die Aushärtung der Bindemittelkomponente bereits bei niedrigeren Temperaturen, d.h. ohne externe Zuführung von Wärme, ermöglicht wird. Besagte "übliche" Beschleuniger sind aminogruppenhaltige Verbindungen, bevorzugt tertiäre Amine wie Triethylamin, Tridimethylaminophenylphenol, Benzyldimethylamin, Dimethylanilin, Diethylanilin, Dimethyl-p-toluidine, Cobalt-Verbindungen wie Cobaltethylhexanoat, Vanadiumoctoat und/oder andere Metallcarboxylate. Als Beschleunigersystem kann z.B. auch eine Kombination von Amin- und Metall-Verbindung eingesetzt werden. Die jeweils zum Einsatz kommenden Mengen eines Radikalstarters und eines ggf. vorhandenen Beschleunigersystems sind dem Fachmann bekannt.

Darüber hinaus kann die erfindungsgemäß härtbare Polymermischung, wenn notwendig, Verarbeitungsadditive, wie Trennmittel und Antischaummittel, Inhibitoren, Stabilisatoren, wie Antioxidantien, Lichtschutzmittel, Wärmestabilisatoren und Flammschutzmittel, Modifikatoren, wie Benetzungsmittel, Weichmacher, Verdicker, Thixotropiermittel, Schlagzähmacher und Blähmittel und/oder Oberflächenmodifikatoren, wie Antistatika, Pigmente, Netz- und Dispergiermittel enthalten. Die Auswahl der entsprechenden Additive erfolgt in bekannter Weise nach dem endgültigen Einsatzzweck.

Die erfindungsgemäße Polymermischung wird in bekannter Weise hergestellt, indem man die genannten Komponenten der Mischung in üblichen Mischeinheiten zusammenbringt, wobei vorzugsweise die Vermittleradditivkomponente unmittelbar von Verarbeitung und Aushärtung der Polymermischung zugesetzt wird.

Alternativ kann das Vermittleradditiv auch mit dem Bindemittelharz gemischt werden und diese Kombination zu einem späteren Zeitpunkt mit den weiteren genannten Komponenten der Mischung in üblichen Mischeinheiten zusammengebracht und dann ausgehärtet werden. Alternativ kann der eingesetzte Zuschlagsstoff (Füllstoffkomponente) auch im Vorhinein mit dem Vermittleradditiv behandelt werden. Der oberflächen behandelte Zuschlagsstoff (Füllstoffkomponente) kann dann in der beschriebenen Mischung eingesetzt werden, wobei an dieser Stelle ggf. weitere Mengen eines Vermittleradditivs eingesetzt werden können. Diese so erhaltenen Polymermischungen können im Fall der Duromeren in an sich bekannter Weise durch Polymerisation der ethylenisch ungesättigten Verbindungen und ggf. durch Einsatz eines Vernetzers ausgehärtet werden. Der Aushärtungsprozess wird vom verwendeten Polymer-System, der Aushärtezeit, der Temperatur und der Masse des auszuhärtenden Systems bestimmt. Die Aushärtung kann ohne Zufuhr von thermischer Energie bei Raumtemperatur als Starttemperatur geschehen; bei dieser Reaktionsführung werden in der Regel die zuvor genannten Beschleuniger eingesetzt. Die exotherme Reaktion führt zu einem Temperaturanstieg. Dabei kann der Verlauf der Härtung durch Bestimmung des Restmonomergehalts im sich bildenden polymeren Endprodukt ermittelt werden. Für bestimmte Anwendungen z. B. bei einem Lebensmittelkontakt ist es angebracht, einen möglichen Restmonomergehalt auf ein Mindestmaß zu reduzieren. Dazu wird vorzugsweise eine Nachhärtung durchgeführt, bei der das ausgehärtete Polymere noch mehrere Stunden bei erhöhter Temperatur gehalten wird, damit die noch vorhandenen Monomeren noch polymerisieren können. Typische Nachhärtungsbedingungen sind Temperaturen von 60-100°C über Zeitdauern von 6 bis 24 Stunden.

Alternativ kann die Härtung des Polymersystems auch unter externer Energiezufuhr bei Starttemperaturen über 25°C durchgeführt werden, wie bei Temperaturen von 100 bis 160°C. Ein externer Energieeintrag kann auf verschiedenen Wegen erfolgen, unter anderem auch durch das Aufbringen von Druck. In diesem Zusammenhang sollen als Beispiele Pressmassen wie Sheet Molding Compounds (SMC) oder Bulk Molding Compounds (BMC) genannt werden.

Auch sonstige Verfahren zur Herstellung von Formteilen, z.B. "Injection Molding" (Spritzguss bzw. "Reaction Injection Molding", RIM) oder "Infusion Molding" (Vakuuminfusionsverfahren)", können Anwendung finden.

Die Erfindung betrifft weiterhin die Verwendung des vorstehend beschriebenen Komposits als Material für ein Formteil, welches bevorzugt vorliegt als Arbeitsplatte (z.B. in Küchen oder für Arbeitsoberflächen bzw. Thekenoberflächen), Formteil für den Sanitärbereich (z.B. Badewanne, Waschbecken, Toilettenschüssel), Rohr, Rinne, Schacht, Verbindungsstück, Segmentbauteil, Platte, Fliese, Bodensegment, Auskleidungssegment, Wand, Decke, Kunstmarmor, Rahmen, Behälter, Flasche, Becher, Schüssel, Dekorationsartikel, Spüle, Becken, Wanne, Trog oder Formteil für den Kraftfahrzeugs-, Flugzeugs- und Bootsbau.

Die erfindungsgemäßen Komposite können in Form von Kompositmaterialien sowohl in Gebäuden als auch im Freien sowie im Erdreich zur Herstellung von Formkörpern eingesetzt werden. Entsprechende Formkörper werden zum Beispiel in Wohnräumen, im Bürobereich, im Ladenbau, im Sanitärbereich, in Küchen, in Friseursalons, in Arztpraxen, in Krankenhäuser, in Flughäfen, in Laboratorien, in der Gastronomie oder in der Landwirtschaft eingesetzt.

Die Erfindung betrifft schließlich auch die Verwendung von den vorstehend beschriebenen Vermittleradditivkomponenten (A) zur Verbesserung der mechanischen Eigenschaften von Werkstoffen, die Grenzflächen zwischen organischen Polymeren und anorganischen Materialien mit basischen oder amphoteren Oberflächen gemäß DIN EN ISO 787-9 aufweisen.

Die vorliegende Erfindung soll nachstehend anhand von Ausführungsbespielen näher erläutert werden.

### Ausführungsbeispiele:

In den Synthese-Beispielen werden folgende Oligomere bzw. Polymere als Rohstoffe eingesetzt:

**Tab. 1: In den Synthesebeispielen eingesetzte Rohstoffe.**

| *Name* | *Struktur* |
|---|---|
| Polyether A | Polyethylenglycolmonoallylether mit durchschnittl. 9 Ethylenoxid-Wiederholungseinheiten |
| Polyether B | Polyethylenglycolmonoallylether mit durchschnittl. 3,5 Ethylenoxid-Wiederholungseinheiten |
| Polyether C | Polyethylenglycolmonomethacrylat mit durchschnittl. 8 Ethylenoxid-Wiederholungseinheiten |
| Polyether D | Polypropylenglycolmonoacrylat mit durchschnittl. 6 Propylenoxid-Wiederholungseinheiten |
| Polyether E | Polyethylenglycolmonoacrylat mit durchschnittl. 10 Ethylenoxid-Wiederholungseinheiten |
| Polyether F | Polyethylenglycolmonoacrylat mit durchschnittl. 4,5 Ethylenoxid-Wiederholungseinheiten |
| Polyether G | Polyethylenglycolmonoallylether mit durchschnittl. 7,6 Ethylenoxid-Wiederholungseinheiten |
| Oxetan X | monohydroxyfunktionelles Polyethylenoxid, gestartet mit 3-Ethyl-3-(hydroxymethyl)oxacyclobutan und durchschnittl. 3,3 Ethylenoxid-Wiederholungseinheiten |

Amberlyst A-21 ist ein Anionenaustauscher (Fa. Rohm & Haas, Basis: Reaktionsprodukt von N-methyl-methanamin mit chloromethyliertem Divinylbenzol-Styrol Copolymer).

### I Herstellung der Vermittleradditive

Die Herstellung der Vermittleradditive kann ggf. in einem organischen Lösungsmittel erfolgen. In den folgenden Angaben steht die Abkürzung NMR für kernmagnetische Resonanzspektroskopie.

Die vollständige Umsetzung der in den Synthesebeispielen eingesetzten Säureanhydride wurde durch Messung der Anhydridsäurezahl (ASZ) der Produkte sichergestellt. Unter ASZ wird wird die Menge KOH in mg verstanden, die der Neutralisation einer Carboxylgruppe des Anhydrids in 1 g Substanz entspricht. Hierzu wird das enthaltene Säureanhydrid zunächst mit n-Butylamin quantitativ umgesetzt und das überschüssige Amin mittels Salzsäure zurücktitriert. Dabei werden ca. 0,3 Milliäquivalente (bezogen auf Anhydridgehalt) genau in ein 80 ml-Wägeglas eingewogen und in 50 ml Aceton (Wassergehalt 3%) gelöst. Nach Zugabe von 11,0 ml 0.1 n Butylaminlösung (in Aceton) wird die Probe 45 min. bei 50°C temperiert. Zur Bestimmung der Anhydridzahl wird das überschüssige Butylamin in der Probe nach dem Abkühlen potentiometrisch mit 0.1 n isopropanolischer HCl zurücktitriert.

Die Messung der OH-Zahl (Hydroxylzahl) wurde gemäß DIN ISO 4629 durchgeführt.

### Vermittleradditiv 1:

In einem Rundkolben mit Rückflusskühler, Gaseinlass, Temperaturfühler und KPG-Rührer werden unter Stickstoffatmosphäre 50,00 g Polyether D und 10,96 g Bernsteinsäureanhyrid sowie 0,10 g Kaliumcarbonat und 0,10 g 2,6-Di-tert-butyl-4-methylphenol und 0,10 g 4-Methoxyphenol in 40,64 g 1-Methoxy-2-propylacetat vorgelegt. Unter Rühren wird auf 110°C erwärmt und 5 h bei dieser Temperatur gerührt. Man erhält als Produkt eine klare, leicht gelbliche, niederviskose Flüssigkeit (60%-ige Lösung der Wirksubstanz in 1-Methoxy-2-propylacetat).

### Vermittleradditiv 2:

In einem Rundkolben mit Rückflusskühler, Gaseinlass, Temperaturfühler und KPG-Rührer werden unter Stickstoffatmosphäre 50,00 g Polyether D und 10,75 g Maleinsäureanhyrid sowie 0,10 g Kaliumcarbonat und 0,10 g 2,6-Di-tert-butyl-4-methylphenol und 0,10 g 4-Methoxyphenol in 40,50 g 1-Methoxy-2-propylacetat vorgelegt. Unter Rühren wird auf 120°C erwärmt und 4 h bei dieser Temperatur gerührt. Man erhält als Produkt eine trübe, farblose, niederviskose Flüssigkeit (60%-ige Lösung der Wirksubstanz in 1-Methoxy-2-propylacetat).

### Vermittleradditiv 3:

In einem Rundkolben mit Rückflusskühler, Gaseinlass, Temperaturfühler und KPG-Rührer werden unter Stickstoffatmosphäre 70,00 g Polyether A und 30,57 g Timellithsäureanhyrid vorgelegt. Unter Rühren wird auf 135°C erwärmt und 4 h bei dieser Temperatur gerührt. Man erhält als Produkt eine klare, braune, mittel- bis hochviskose Flüssigkeit.

### Vermittleradditiv 4:

### Stufe 1:

In einem Rundkolben mit Rückflusskühler, Temperaturfühler und KPG-Rührer werden 53,84 g Polyether C, 31,46 g ε-Caprolacton, 18,40 g δ-Valerolacton, 0,50 g 2,6-Di-tert-butyl-p-kresol und 0,10 g 4-Hydroxy-2,2,6,6-tetramethylpiperidin-N-oxyl sowie 0,15 g p-Toluolsulfonsäure vorgelegt. Unter Rühren wird auf 100°C erwärmt und 6 h bei dieser Temperatur gerührt. Man gibt weitere 0,20 g p-Toluolsulfonsäure zu und rührt weitere 4 h bei 100°C. Hiernach waren die Lactone nahezu vollständig umgesetzt, was am Festkörperwert der Probe (20 min bei 150°C) von über 98% erkennbar war. Das erhaltene Zwischenprodukt ist bei Raumtemperatur eine trübe, gelbbraune, mittelviskose Flüssigkeit (OH-Zahl: 73,9).

### Stufe 2:

50,00 g dieses Zwischenprodukts sowie 6,59 g Bernsteinsäureanhydrid werden in einem Rundkolben mit Rückflusskühler, Temperaturfühler und KPG-Rührer unter Rühren auf 100°C erwärmt und 8 h bei dieser Temperatur gerührt. Das Produkt fällt als klare, braune, mittelviskose Flüssigkeit an.

### Vermittleradditiv 5:

In einem Rundkolben mit Rückflusskühler, Gaseinlass, Temperaturfühler und KPG-Rührer werden unter Stickstoffatmosphäre 70,00 g Polyether A und 14,85 g Bernsteinsäureanhyrid vorgelegt. Unter Rühren wird auf 100°C erwärmt und 7 h bei dieser Temperatur gerührt. Man erhält als Produkt eine klare, gelbe, mittelviskose Flüssigkeit.

### Vermittleradditiv 6:

### Stufe 1:

In einem Rundkolben mit Rückflusskühler, Temperaturfühler, Tropftrichter und KPG-Rührer werden 122,67 g 1-Methoxy-2-propylacetat, 100,00 g Hydroxyethylmethacrylat und 0,18 g 2,6-Di-tert-butyl-p-kresol sowie 0,18 g Hydrochinon vorgelegt und unter Rühren erwärmt. Bei einer Temperatur von 50°C setzt man 0,36 g Trifluormethansulfonsäure zu und erwärmt weiter auf 80°C. Bei 80°C werden mit einer Dosierrate von 1,2 ml/min 267,3 g 3-Ethyl-3-(hydroxymethyl)oxacyclobutan zudosiert. Man rührt noch 3 h bei 80°C. Hiernach war das 3-Ethyl-3-(hydroxymethyl)oxacyclobutan quantitativ umgesetzt (Nachweis über ¹H-NMR-Spektroskopie). Man kühlt auf 60°C ab, setzt dann 1,8 g Amberlyst A-21 (Ionenaustauscher) zu und rührt 1 h bei 60°C. Hiernach wird der Ionenaustauscher durch Filtration abgetrennt. Das erhaltene Produkt (OH-Zahl: 353) ist ein bei Raumtemperatur milchig-trübe, mittel- bis hochviskose Flüssigkeit, enthaltend 75 Gew.% des Umsetzungsprodukts in 25% 1-Methoxy-2-propylacetat.

### Stufe 2:

50,00 g dieser trüben Lösung werden in einem Rundkolben mit Rückflusskühler, Temperaturfühler und KPG-Rührer zusammen mit 31,47 g Bernsteinsäureanhydrid und 28,40 g 1-Methoxy-2-propylacetat unter Rühren auf 100°C erwärmt und 4 h bei dieser Temperatur gerührt. Das Produkt fällt als klare, braune, mittelviskose, 60%-ige Lösung des Umsetzungprodukts in 1-Methoxy-2-propylacetat an.

### Vermittleradditiv 6a:

30,00 g der Stufe 1 von Vermittleradditiv 6 werden in einem Rundkolben mit Rückflusskühler, Temperaturfühler und KPG-Rührer zusammen mit 27,97 g Phthalsäureanhydrid, 0,10 g Kaliumcarbonat und 23,20 g 1-Methoxy-2-propylacetat unter Rühren auf 100°C erwärmt und 5 h bei dieser Temperatur gerührt. Das Produkt fällt als klare, gelbbraune, mittelviskose, 60%-ige Lösung des Umsetzungprodukts in 1-Methoxy-2-propylacetat an.

### Vermittleradditiv 6b:

30,00 g der Stufe 1 von Vermittleradditiv 6 werden in einem Rundkolben mit Rückflusskühler, Temperaturfühler und KPG-Rührer zusammen mit 36,28 g Trimellithsäureanhydrid, 0,10 g Kaliumcarbonat und 28,60 g 1-Methoxy-2-propylacetat unter Rühren auf 120°C erwärmt und 2 h bei dieser Temperatur sowie im Anschluss 4 h bei 150°C gerührt. Das Produkt ist braun und bei Raumtemperatur hochviskos bis fest (60%-ig in 1-Methoxy-2-propylacetat).

### Vermittleradditiv 6c:

30,00 g der Stufe 1 von Vermittleradditiv 6 werden in einem Rundkolben mit Rückflusskühler, Temperaturfühler und KPG-Rührer zusammen mit 18,51 g Maleinsäureanhydrid, 0,10 g Kaliumcarbonat und 6,79 g 1-Methoxy-2-propylacetat unter Rühren auf 100°C erwärmt und 5 h bei dieser Temperatur gerührt. Das Produkt fällt als klare, gelbe, mittel- bis hochviskose Lösung an (75 Gew.% des Umsetzungsprodukts sind angelöst in 1-Methoxy-2-propylacetat).

### Vermittleradditiv 7:

### Stufe 1:

In einem Rundkolben mit Rückflusskühler, Temperaturfühler, Tropftrichter und KPG-Rührer werden 100,00 g Hydroxyethylmethacrylat und 0,34 g 2,6-Di-tert-butyl-p-kresol sowie 0,34 g Hydrochinon vorgelegt und unter Rühren erwärmt. Bei einer Temperatur von 40°C setzt man 0,68 g Trifluormethansulfonsäure zu und erwärmt weiter auf 80°C. Bei 80°C wird mit einer Dosierrate von 1,5 ml/min eine Mischung von 178,19 g 3-Ethyl-3-(hydroxymethyl)oxacyclobutan und 400,89 g Oxetan X zudosiert. Man rührt noch 3 h bei 80°C. Hiernach waren 3-Ethyl-3-(hydroxymethyl)oxacyclobutan und Oxetan X quantitativ umgesetzt (Nachweis über ¹H-NMR-Spektroskopie). Man kühlt auf 60°C ab, setzt dann 1,8 g Amberlyst A-21 zu und rührt 1 h bei 60°C. Hiernach wird der Ionenaustauscher durch Filtration abgetrennt. Das erhaltene Produkt (OH-Zahl: 324) ist eine bei Raumtemperatur klare, gelbe, hochviskose Flüssigkeit.

### Stufe 2:

75,00 g dieses Reaktionsprodukts werden in einem Rundkolben mit Rückflusskühler, Temperaturfühler und KPG-Rührer zusammen mit 43,30 g Bernsteinsäureanhydrid und 78,87 g 1-Methoxy-2-propylacetat unter Rühren auf 100°C erwärmt und 4 h bei dieser Temperatur gerührt. Das Produkt fällt als klare, braune, mittelviskose, 60%-ige Lösung des Umsetzungprodukts in 1-Methoxy-2-propylacetat an.

### Vermittleradditiv 8:

50,00 g Polyether G und 26,20 g Bernsteinsäureanhydrid sowie 0,25 g Kaliumcarbonat werden in einem Rundkolben mit Rückflusskühler, Gaseinlass, Temperaturfühler und KPG-Rührer unter Stickstoffatmosphäre vorgelegt. Unter Rühren wird auf 110°C erwärmt und 2 h bei dieser Temperatur gerührt. Man erhält als Produkt eine klare, leicht gelbliche, mittelviskose Flüssigkeit.

### Vermittleradditiv 9:

50,00 g Polyether B und 46,06 g Trimellithsäureanhydrid sowie 0,19 g Kaliumcarbonat werden in einem Rundkolben mit Rückflusskühler, Gaseinlass, Temperaturfühler und KPG-Rührer werden unter Stickstoffatmosphäre vorgelegt. Unter Rühren wird auf 140°C erwärmt und 2 h bei dieser Temperatur gerührt. Im Anschluss wird noch 2 h bei 160°C gerührt. Man erhält als Produkt eine braune, mittelviskose Flüssigkeit.

### Vermittleradditiv 10:

### Stufe 1:

In einem Rundkolben mit Rückflusskühler, Temperaturfühler, Tropftrichter und KPG-Rührer werden 100,00 g Hydroxyethylmethacrylat und 0,35 g 2,6-Di-tert-butyl-p-kresol sowie 0,35 g Hydrochinon sowie 234,00 g 1-Methoxy-2-propylacetat vorgelegt und unter Rühren erwärmt. Bei einer Temperatur von 40°C setzt man 0,72 g Trifluormethansulfonsäure zu und erwärmt weiter auf 80°C. Bei 80°C werden mit einer Dosierrate von 2,5 ml/min 601,34 g Oxetan X zudosiert. Man rührt noch 4 h bei 80°C. Hiernach war das Oxetan X quantitativ umgesetzt (Nachweis über ¹H-NMR-Spektroskopie). Man kühlt auf 60°C ab, setzt dann 3,27 g Amberlyst A-21 zu und rührt 1 h bei 60°C. Hiernach wird der Ionenaustauscher durch Filtration abgetrennt. Das erhaltene Zwischenprodukt (OH-Zahl: 202) ist eine bei Raumtemperatur klare, gelbe, mittelviskose Lösung (75 Gew.% der Reaktionsprodukts sind gelöst in 1-Methoxy-2-propylacetat).

### Stufe 2:

60,00 g dieser Zwischenprodukt-Anlösung werden in einem Rundkolben mit Rückflusskühler, Temperaturfühler und KPG-Rührer zusammen mit 21,61 g Bernsteinsäureanhydrid, 0,16 g Kaliumcarbonat und 7,20 g 1-Methoxy-2-propylacetat unter Rühren auf 100°C erwärmt und 8 h bei dieser Temperatur gerührt. Das Produkt fällt als klare, gelbbraune, mittelviskose, 75%-ige Lösung des Umsetzungprodukts in 1-Methoxy-2-propylacetat an.

### Vermittleradditiv 11:

100,00 g Polyether B und 47,94 g Bernsteinsäureanhydrid sowie 0,30 g Kaliumcarbonat werden in einem Rundkolben mit Rückflusskühler, Gaseinlass, Temperaturfühler und KPG-Rührer werden unter Stickstoffatmosphäre vorgelegt. Unter Rühren wird auf 100°C erwärmt und 4 h bei dieser Temperatur gerührt. Man erhält als Produkt eine klare, leichtgelbliche, mittelviskose Flüssigkeit.

### Vermittleradditiv 12:

### Stufe 1:

In einem Rundkolben mit Rückflusskühler, Temperaturfühler, Tropftrichter und KPG-Rührer werden 8,29 g Hydroxyethylmethacrylat und 0,35 g 2,6-Di-tert-butyl-p-kresol sowie 0,35 g Hydrochinon vorgelegt und unter Rühren erwärmt. Bei einer Temperatur von 40°C setzt man 0,10 g Trifluormethansulfonsäure zu und erwärmt weiter auf 80°C. Bei 80°C werden mit einer Dosierrate von 2,5 ml/min 66,61 g Oxetan X zudosiert. Man rührt noch 4 h bei 80°C. Hiernach war das Oxetan X quantitativ umgesetzt (Nachweis über ¹H-NMR-Spektroskopie). Man kühlt auf 60°C ab, setzt dann 0,80 g Amberlyst A-21 zu und rührt 1 h bei 60°C. Hiernach wird der Ionenaustauscher durch Filtration abgetrennt. Das erhaltene Zwischenprodukt (OH-Zahl: 239) ist eine bei Raumtemperatur klare, leichtgelbliche, mittelviskose Flüssigkeit.

### Stufe 2:

40,00 g der Stufe 1 werden in einem Rundkolben mit Rückflusskühler, Temperaturfühler und KPG-Rührer zusammen mit 17,04 g Bernsteinsäureanhydrid und 38,03 g 1-Methoxy-2-propylacetat unter Rühren auf 100°C erwärmt und 3 h bei dieser Temperatur gerührt. Das Produkt fällt als dunkelbraune, mittelviskose, 60%-ige Lösung des Umsetzungprodukts in 1-Methoxy-2-propylacetat an.

### Vermittleradditiv 13:

### Stufe 1:

In einem Rundkolben mit Rückflusskühler, Gaseinlass, Temperaturfühler und KPG-Rührer werden 63,59 g ε-Caprolacton, 0,05 g 2,6-Di-tert-butyl-4-methylphenol und 0,04 g p-Toluolsulfonsäure vorgelegt. Man erwärmt unter Rühren auf 60°C und gibt bei dieser Temperatur 36,27 Hydroxyethylmethacrylat zu. Man rührt noch 6 h bei 90°C weiter. Hiernach werden noch 0,03 g Dibutylethanolamin zur Neutralisation der p-Toluolsulfonsäure zugesetzt. Man erhält als Produkt eine klare, farblose, mittelviskose Flüssigkeit (OH-Zahl = 157).

### Stufe 2:

40,00 g dieses Zwischenprodukts aus Stufe 1 werden in einem Rundkolben mit Rückflusskühler, Temperaturfühler, Tropftrichter und KPG-Rührer zusammen mit 0,16 g 2,6-Di-tert-butyl-p-kresol sowie 0,16 g 4-Methoxyphenol sowie 26,32 g 1-Methoxy-2-propylacetat vorgelegt und unter Rühren erwärmt. Bei einer Temperatur von 40°C setzt man 0,16 g Trifluormethansulfonsäure zu und erwärmt weiter auf 80°C. Bei 80°C werden mit einer Dosierrate von 1,5 ml/min 38,96 g 3-Ethyl-3-methyloloxetan zudosiert. Man rührt noch 4 h bei 80°C. Hiernach war das 3-Ethyl-3-methyloloxetan quantitativ umgesetzt (Nachweis über ¹H-NMR-Spektroskopie). Man kühlt auf 60°C ab, setzt dann 0,80 g Amberlyst A-21 zu und rührt 1 h bei 60°C. Hiernach wird der Ionenaustauscher durch Filtration abgetrennt. Das erhaltene Zwischenprodukt (OH-Zahl: 218) ist eine bei Raumtemperatur trübe, gelbliche, hochviskose Lösung (75 Gew.% der Reaktionsprodukts sind gelöst in 1-Methoxy-2-propylacetat).

### Stufe 3:

50,00 g der Lösung aus Stufe 2 werden in einem Rundkolben mit Rückflusskühler, Gaseinlass, Temperaturfühler und KPG-Rührer zusammen mit 19,43 g Bernsteinsäureanhydrid, 0,10 g Kaliumcarbonat und 22,54 g 1-Methoxy-2-propylacetat auf 100°C erwärmt und 8 h bei dieser Temperatur gerührt. Man erhält als Produkt eine leicht trübe, gelbliche, mittelviskose Flüssigkeit (60%-ige Lösung der Wirksubstanz in 1-Methoxy-2-propylacetat).

### Vermittleradditiv 14:

Stufe 1:

In einem Rundkolben mit Rückflusskühler, Temperaturfühler, Tropftrichter und KPG-Rührer werden 50,00 g Hydroxybutylacrylat und 0,34 g 2,6-Di-tert-butyl-p-kresol, 0,34 g 4-Methoxyphenol, 0,05 g 4-Hydroxy-2,2,6,6-tetramethylpiperidin-n-oxyl sowie 56,91 g 1-Methoxy-2-propylacetat vorgelegt und unter Rühren erwärmt. Bei einer Temperatur von 40°C setzt man 0,34 g Trifluormethansulfonsäure zu und erwärmt weiter auf 80°C. Bei 80°C werden mit einer Dosierrate von 0,7 ml/min 120,76 g 3-Ethyl-3-methyloloxetan zudosiert. Man rührt noch 3 h bei 80°C. Hiernach war das 3-Ethyl-3-methyloloxetan quantitativ umgesetzt (Nachweis über ¹H-NMR-Spektroskopie). Man kühlt auf 60°C ab, setzt dann 1,7 g Amberlyst A-21 zu und rührt 1 h bei 60°C. Hiernach wird der Ionenaustauscher durch Filtration abgetrennt. Das erhaltene Zwischenprodukt (OH-Zahl: 341) ist eine bei Raumtemperatur trübe, leicht gelbliche, hochviskose Lösung (75 Gew.% der Reaktionsprodukts sind gelöst in 1-Methoxy-2-propylacetat).

### Stufe 2:

60,00 g der Lösung aus Stufe 1 werden in einem Rundkolben mit Rückflusskühler, Gaseinlass, Temperaturfühler und KPG-Rührer zusammen mit 36,47 g Bernsteinsäureanhydrid, 0,13 g Kaliumcarbonat und 29,41 g 1-Methoxy-2-propylacetat auf 100°C erwärmt und 8 h bei dieser Temperatur gerührt. Man erhält als Produkt eine klare, gelbliche, mittel- bis hochviskose Flüssigkeit (60%-ige Lösung der Wirksubstanz in 1-Methoxy-2-propylacetat).

### Vermittleradditiv 15:

### Stufe 1:

In einem Rundkolben mit Rückflusskühler, Temperaturfühler, Tropftrichter und KPG-Rührer werden 30,00 g Hydroxyethylmethacrylat und 0,71 g 2,6-Di-tert-butyl-p-kresol, 0,71 g 4-Methoxyphenol sowie 189,27 g 1-Methoxy-2-propylacetat vorgelegt und unter Rühren erwärmt. Bei einer Temperatur von 40°C setzt man 0,71 g Trifluormethansulfonsäure zu und erwärmt weiter auf 80°C. Bei 80°C werden mit einer Dosierrate von 1,0 ml/min eine Mischung von 133,63 g 3-Ethyl-3-methyloloxetan und 120,27 g Oxetan X zudosiert. Man rührt noch 3 h bei 80°C. Hiernach waren 3-Ethyl-3-methyloloxetan und Oxetan X quantitativ umgesetzt (Nachweis über ¹H-NMR-Spektroskopie). Man kühlt auf 60°C ab, setzt dann 3,55 g Amberlyst A-21 zu und rührt 1 h bei 60°C. Hiernach wird der Ionenaustauscher durch Filtration abgetrennt. Das erhaltene Zwischenprodukt (OH-Zahl: 225) ist eine bei Raumtemperatur leicht trübe, gelbliche, mittelviskose Lösung (60 Gew.% der Reaktionsprodukts sind gelöst in 1-Methoxy-2-propylacetat).

### Stufe 2:

60,00 g der Lösung aus Stufe 1 werden in einem Rundkolben mit Rückflusskühler, Gaseinlass, Temperaturfühler und KPG-Rührer zusammen mit 24,07 g Bernsteinsäureanhydrid, 0,10 g Kaliumcarbonat und 13,75 g 1-Methoxy-2-propylacetat auf 100°C erwärmt und 8 h bei dieser Temperatur gerührt. Man erhält als Produkt eine klare, gelbliche, mittelviskose Flüssigkeit (60%-ige Lösung der Wirksubstanz in 1-Methoxy-2-propylacetat).

### Vermittleradditiv 16:

### Stufe 1:

In einem Rundkolben mit Rückflusskühler, Temperaturfühler, Tropftrichter und KPG-Rührer werden 30,00 g Hydroxyethylmethacrylat und 0,43 g 2,6-Di-tert-butyl-p-kresol, 0,43 g 4-Methoxyphenol sowie 72,36 g 1-Methoxy-2-propylacetat vorgelegt und unter Rühren erwärmt. Bei einer Temperatur von 40°C setzt man 0,43 g Trifluormethansulfonsäure zu und erwärmt weiter auf 80°C. Bei 80°C werden mit einer Dosierrate von 1,0 ml/min 187,1 g 3-Ethyl-3-methyloloxetan zudosiert. Man rührt noch 3 h bei 80°C. Hiernach war das 3-Ethyl-3-methyloloxetan quantitativ umgesetzt (Nachweis über ¹H-NMR-Spektroskopie). Man kühlt auf 60°C ab, setzt dann 2,15 g Amberlyst A-21 zu und rührt 1 h bei 60°C. Hiernach wird der Ionenaustauscher durch Filtration abgetrennt. Das erhaltene Zwischenprodukt (OH-Zahl: 353) ist eine bei Raumtemperatur trübe, leicht gelbliche, hochviskose Lösung (75 Gew.% der Reaktionsprodukts sind gelöst in 1-Methoxy-2-propylacetat).

### Stufe 2:

40,00 g der Lösung aus Stufe 1 werden in einem Rundkolben mit Rückflusskühler, Gaseinlass, Temperaturfühler und KPG-Rührer zusammen mit 25,17 g Bernsteinsäureanhydrid, 0,10 g Kaliumcarbonat und 25,11 g 1-Methoxy-2-propylacetat auf 100°C erwärmt und 4 h bei dieser Temperatur gerührt. Im Anschluss rührt man noch 2 h bei 110°C. Man erhält als Produkt eine leicht trübe, gelbliche, mittelviskose Flüssigkeit (60%-ige Lösung der Wirksubstanz in 1-Methoxy-2-propylacetat).

### Vermittleradditiv 17:

In einem Rundkolben mit Rückflusskühler, Gaseinlass, Temperaturfühler und KPG-Rührer werden unter Stickstoffatmosphäre 50,00 g Polyether C und 13,28 g Bernsteinsäureanhyrid sowie 0,10 g Kaliumcarbonat, 0,10 g 2,6-Di-tert-butyl-4-methylphenol und 0,10 g 4-Methoxyphenol in 42,19 g 1-Methoxy-2-propylacetat vorgelegt. Unter Rühren wird auf 100°C erwärmt und 6 h bei dieser Temperatur gerührt. Man erhält als Produkt eine leicht trübe, farblose, niederviskose Flüssigkeit (60%-ige Lösung der Wirksubstanz in 1-Methoxy-2-propylacetat).

### Vermittleradditiv 18:

In einem Rundkolben mit Rückflusskühler, Gaseinlass, Temperaturfühler und KPG-Rührer werden unter Stickstoffatmosphäre 50,00 g Polyether C und 13,02 g Maleinsäureanhyrid sowie 0,10 g Kaliumcarbonat, 0,10 g 2,6-Di-tert-butyl-4-methylphenol und 0,10 g 4-Methoxyphenol in 42,01 g 1-Methoxy-2-propylacetat vorgelegt. Unter Rühren wird auf 120°C erwärmt und 6 h bei dieser Temperatur gerührt. Man erhält als Produkt eine trübe, gelbliche, niederviskose Flüssigkeit (60%-ige Lösung der Wirksubstanz in 1-Methoxy-2-propylacetat).

### Vermittleradditiv 19:

In einem Rundkolben mit Rückflusskühler, Gaseinlass, Temperaturfühler und KPG-Rührer werden unter Stickstoffatmosphäre 50,00 g Polyether C und 19,77 g Phthalsäureanhyrid sowie 0,11 g Kaliumcarbonat, 0,11 g 2,6-Di-tert-butyl-4-methylphenol und 0,11 g 4-Methoxyphenol in 46,45 g 1-Methoxy-2-propylacetat vorgelegt. Unter Rühren wird auf 120°C erwärmt und 6 h bei dieser Temperatur gerührt. Man erhält als Produkt eine trübe, farblose, niederviskose Flüssigkeit (60%-ige Lösung der Wirksubstanz in 1-Methoxy-2-propylacetat).

### Vermittleradditiv 19:

In einem Rundkolben mit Rückflusskühler, Gaseinlass, Temperaturfühler und KPG-Rührer werden unter Stickstoffatmosphäre 50,00 g Polyether C und 19,77 g Phthalsäureanhyrid sowie 0,11 g Kaliumcarbonat, 0,11 g 2,6-Di-tert-butyl-4-methylphenol und 0,11 g 4-Methoxyphenol in 46,45 g 1-Methoxy-2-propylacetat vorgelegt. Unter Rühren wird auf 120°C erwärmt und 6 h bei dieser Temperatur gerührt. Man erhält als Produkt eine trübe, farblose, niederviskose Flüssigkeit (60%-ige Lösung der Wirksubstanz in 1-Methoxy-2-propylacetat).

### Vermittleradditiv 20:

In einem Rundkolben mit Rückflusskühler, Gaseinlass, Temperaturfühler und KPG-Rührer werden unter Stickstoffatmosphäre 50,00 g Polyether E und 8,66 g Bernsteinsäureanhyrid sowie 0,10 g Kaliumcarbonat, 0,10 g 2,6-Di-tert-butyl-4-methylphenol und 0,10 g 4-Methoxyphenol in 39,14 g 1-Methoxy-2-propylacetat vorgelegt. Unter Rühren wird auf 100°C erwärmt und 6 h bei dieser Temperatur gerührt. Man erhält als Produkt eine klare, farblose, niederviskose Flüssigkeit (60%-ige Lösung der Wirksubstanz in 1-Methoxy-2-propylacetat).

### Vermittleradditiv 21:

In einem Rundkolben mit Rückflusskühler, Gaseinlass, Temperaturfühler und KPG-Rührer werden unter Stickstoffatmosphäre 50,00 g Polyether E und 8,49 g Maleinsäureanhyrid sowie 0,10 g Kaliumcarbonat, 0,10 g 2,6-Di-tert-butyl-4-methylphenol und 0,10 g 4-Methoxyphenol in 38,99 g 1-Methoxy-2-propylacetat vorgelegt. Unter Rühren wird auf 120°C erwärmt und 6 h bei dieser Temperatur gerührt. Man erhält als Produkt eine klare, leicht gelbliche, niederviskose Flüssigkeit (60%-ige Lösung der Wirksubstanz in 1-Methoxy-2-propylacetat).

### Vermittleradditiv 22:

In einem Rundkolben mit Rückflusskühler, Gaseinlass, Temperaturfühler und KPG-Rührer werden unter Stickstoffatmosphäre 50,00 g Polyether E und 12,83 g Phthalsäureanhyrid sowie 0,10 g Kaliumcarbonat, 0,10 g 2,6-Di-tert-butyl-4-methylphenol und 0,10 g 4-Methoxyphenol in 38,99 g 1-Methoxy-2-propylacetat vorgelegt. Unter Rühren wird auf 120°C erwärmt und 6 h bei dieser Temperatur gerührt. Man erhält als Produkt eine klare, leicht gelbliche, niederviskose Flüssigkeit (60%-ige Lösung der Wirksubstanz in 1-Methoxy-2-propylacetat).

### Vermittleradditiv 23:

### Stufe 1:

In einem Rundkolben mit Rückflusskühler, Gaseinlass, Temperaturfühler und KPG-Rührer werden unter Stickstoffatmosphäre 50,00 g Polyethylenglycol-200 und 149,30 g 1-Methoxy-2-propylacetat vorgelegt. Unter Rühren wird 40°C erwärmt und 0,23 g Trifluormethansulfonsäure zugegeben. Man erwärmt auf 80°C und dosiert unter Rühren 174,00 g 3-Ethyl-3-methyloloxetan mit einer Rate von 1,0 mL/min zu und rührt nach erfolgter Zudosierung weitere 4 h bei 80°C (vollständiger Umsatz von 3-Ethyl-3-methyloloxetan, Nachweis über ¹H-NMR-Spektroskopie). Man kühlt auf 60°C ab, setzt dann 1,12 g Amberlyst A-21 zu und rührt 1 h bei 60°C. Hiernach wird der Ionenaustauscher durch Filtration abgetrennt. Das erhaltene Zwischenprodukt (OH-Zahl: 306) ist eine bei Raumtemperatur trübe, leicht gelbliche, viskose Lösung (60 Gew.% des Reaktionsprodukts sind gelöst in 1-Methoxy-2-propylacetat).

### Stufe 2:

In einem Rundkolben mit Rückflusskühler, Gaseinlass, Temperaturfühler und KPG-Rührer werden unter Stickstoffatmosphäre 50,00 g des Produkts aus Stufe 1, 6,69 g Maleinsäureanhydrid, 0,07 g K₂CO₃ und 5,94 g 1-Methoxy-2-propylacetat vorgelegt. Unter Rühren wird auf 100°C erwärmt und 4 h bei dieser Temperatur weitergerührt (Produkt: trübe, gelbliche, mittelviskose Flüssigkeit, 60%-ige Anlösung des Reaktionsprodukts in 1-Methoxy-2-propylacetat, OH-Zahl=123).

### Stufe 3:

In einem Rundkolben mit Rückflusskühler, Gaseinlass, Temperaturfühler und KPG-Rührer werden unter Stickstoffatmosphäre 39,00 g des Produkts aus Stufe 1, 8,55 g Bernsteinsäureanhydrid, 0,05 g K₂CO₃ und 5,70 g 1-Methoxy-2-propylacetat vorgelegt. Unter Rühren wird auf 120°C erwärmt und 1 h bei dieser Temperatur weitergerührt; im Anschluss wird weitere 6 h bei 100°C gerührt (Produkt: klare, gelbliche, mittelviskose Flüssigkeit, 60%-ige Anlösung des Reaktionsprodukts in 1-Methoxy-2-propylacetat).

### Vermittleradditiv 24:

In einem Rundkolben mit Rückflusskühler, Gaseinlass, Temperaturfühler und KPG-Rührer werden unter Stickstoffatmosphäre 50,00 g des Produkts aus Stufe 1 von Vermittleradditiv 23, 26,75 g Maleinsäureanhydrid, 0,10 g K₂CO₃ und 19,33 g 1-Methoxy-2-propylacetat vorgelegt. Unter Rühren wird auf 100°C erwärmt und 4 h bei dieser Temperatur weitergerührt. Im Anschluss werden weitere 0,10 g K₂CO₃ und nochmals 3 h bei 100°C gerührt (Produkt: klare, bräunliche, mittel- bis hochviskose Flüssigkeit, 60%-ige Anlösung des Reaktionsprodukts in 1-Methoxy-2-propylacetat).

### Vermittleradditiv 25:

In einem Rundkolben mit Rückflusskühler, Gaseinlass, Temperaturfühler und KPG-Rührer werden unter Stickstoffatmosphäre 50,00 g Polyether F und 18,18 g Bernsteinsäureanhyrid sowie 0,11 g Kaliumcarbonat, 0,11 g 2,6-Di-tert-butyl-4-methylphenol und 0,11 g 4-Methoxyphenol in 45,45 g 1-Methoxy-2-propylacetat vorgelegt. Unter Rühren wird auf 110°C erwärmt und 6 h bei dieser Temperatur gerührt. Man erhält als Produkt eine klare, farblose, niederviskose Flüssigkeit (60%-ige Lösung der Wirksubstanz in 1-Methoxy-2-propylacetat).

### Vermittleradditiv 26:

In einem Rundkolben mit Rückflusskühler, Gaseinlass, Temperaturfühler und KPG-Rührer werden unter Stickstoffatmosphäre 50,00 g Polyether F und 17,83 g Maleinsäureanhyrid sowie 0,11 g Kaliumcarbonat, 0,11 g 2,6-Di-tert-butyl-4-methylphenol und 0,11 g 4-Methoxyphenol in 45,45 g 1-Methoxy-2-propylacetat vorgelegt. Unter Rühren wird auf 120°C erwärmt und 6 h bei dieser Temperatur gerührt. Man erhält als Produkt eine klare, gelbliche, niederviskose Flüssigkeit (60%-ige Lösung der Wirksubstanz in 1-Methoxy-2-propylacetat).

### Vermittleradditiv 27:

In einem Rundkolben mit Rückflusskühler, Gaseinlass, Temperaturfühler und KPG-Rührer werden unter Stickstoffatmosphäre 50,00 g Polyether F und 26,93 g Phthalsäureanhyrid sowie 0,13 g Kaliumcarbonat, 0,13 g 2,6-Di-tert-butyl-4-methylphenol und 0,13 g 4-Methoxyphenol in 51,28 g 1-Methoxy-2-propylacetat vorgelegt. Unter Rühren wird auf 110°C erwärmt und 6 h bei dieser Temperatur gerührt. Man erhält als Produkt eine klare, leicht gelbliche, niederviskose Flüssigkeit (60%-ige Lösung der Wirksubstanz in 1-Methoxy-2-propylacetat).

### Vermittleradditiv 28:

10,00 g der Lösung aus Stufe 1 von Vermittleradditiv 16 werden in einem Rundkolben mit Rückflusskühler, Gaseinlass, Temperaturfühler und KPG-Rührer zusammen mit 24,68 g Maleinsäureanhydrid, 0,10 g Kaliumcarbonat und 24,79 g 1-Methoxy-2-propylacetat auf 100°C erwärmt und 4 h bei dieser Temperatur gerührt. Im Anschluss rührt man noch 2 h bei 110°C. Man erhält als Produkt eine klare, gelbliche, mittelviskose Flüssigkeit (60%-ige Lösung der Wirksubstanz in 1-Methoxy-2-propylacetat).

### Vermittleradditiv 29:

40,00 g der Lösung aus Stufe 1 von Vermittleradditiv 16 werden in einem Rundkolben mit Rückflusskühler, Gaseinlass, Temperaturfühler und KPG-Rührer zusammen mit 37,29 g Phthalsäureanhydrid, 0,11 g Kaliumcarbonat und 33,20 g 1-Methoxy-2-propylacetat auf 120°C erwärmt und 6 h bei dieser Temperatur gerührt. Man erhält als Produkt eine klare, gelbliche, mittelviskose Flüssigkeit (60%-ige Lösung der Wirksubstanz in 1-Methoxy-2-propylacetat).

### Vermittleradditiv 30:

60,00 g der Lösung aus Stufe 1 von Vermittleradditiv 15 werden in einem Rundkolben mit Rückflusskühler, Gaseinlass, Temperaturfühler und KPG-Rührer zusammen mit 23,60 g Maleinsäureanhydrid, 0,10 g Kaliumcarbonat und 13,43 g 1-Methoxy-2-propylacetat auf 100°C erwärmt und 8 h bei dieser Temperatur gerührt. Man erhält als Produkt eine klare, gelbliche, mittelviskose Flüssigkeit (60%-ige Lösung der Wirksubstanz in 1-Methoxy-2-propylacetat).

### Vermittleradditiv 31:

50,00 g der Lösung aus Stufe 1 von Vermittleradditiv 15 werden in einem Rundkolben mit Rückflusskühler, Gaseinlass, Temperaturfühler und KPG-Rührer zusammen mit 29,71 g Phthalsäureanhydrid, 0,10 g Kaliumcarbonat und 17,89 g 1-Methoxy-2-propylacetat auf 120°C erwärmt und 6 h bei dieser Temperatur gerührt. Man erhält als Produkt eine klare, gelbliche, mittelviskose Flüssigkeit (60%-ige Lösung der Wirksubstanz in 1-Methoxy-2-propylacetat).

### Vermittleradditiv 32:

60,00 g der Lösung aus Stufe 1 von Vermittleradditiv 14 werden in einem Rundkolben mit Rückflusskühler, Gaseinlass, Temperaturfühler und KPG-Rührer zusammen mit 35,76 g Maleinsäureanhydrid, 0,13 g Kaliumcarbonat und 28,94 g 1-Methoxy-2-propylacetat auf 100°C erwärmt und 8 h bei dieser Temperatur gerührt. Man erhält als Produkt eine klare, gelbliche, mittel- bis hochviskose Flüssigkeit (60%-ige Lösung der Wirksubstanz in 1-Methoxy-2-propylacetat).

### Vermittleradditiv 33:

50,00 g der Lösung aus Stufe 1 von Vermittleradditiv 14 werden in einem Rundkolben mit Rückflusskühler, Gaseinlass, Temperaturfühler und KPG-Rührer zusammen mit 45,02 g Phthalsäureanhydrid, 0,13 g Kaliumcarbonat und 34,26 g 1-Methoxy-2-propylacetat auf 120°C erwärmt und 8 h bei dieser Temperatur gerührt. Man erhält als Produkt eine klare, gelbliche, mittelviskose Flüssigkeit (60%-ige Lösung der Wirksubstanz in 1-Methoxy-2-propylacetat).

### Vermittleradditiv 34:

50,00 g der Lösung aus Stufe 2 von Vermittleradditiv 13 werden in einem Rundkolben mit Rückflusskühler, Gaseinlass, Temperaturfühler und KPG-Rührer zusammen mit 19,05 g Maleinsäureanhydrid, 0,10 g Kaliumcarbonat und 22,29 g 1-Methoxy-2-propylacetat auf 120°C erwärmt und 8 h bei dieser Temperatur gerührt. Man erhält als Produkt eine klare, gelbliche, mittelviskose Flüssigkeit (60%-ige Lösung der Wirksubstanz in 1-Methoxy-2-propylacetat).

### Vermittleradditiv 35:

50,00 g der Lösung aus Stufe 2 von Vermittleradditiv 13 werden in einem Rundkolben mit Rückflusskühler, Gaseinlass, Temperaturfühler und KPG-Rührer zusammen mit 28,82 g Phthalsäureanhydrid, 0,11 g Kaliumcarbonat und 28,79 g 1-Methoxy-2-propylacetat auf 120°C erwärmt und 8 h bei dieser Temperatur gerührt. Man erhält als Produkt eine klare, gelbliche, mittelviskose Flüssigkeit (60%-ige Lösung der Wirksubstanz in 1-Methoxy-2-propylacetat).

### Vermittleradditiv 36:

### Stufe 1:

In einem Rundkolben mit Rückflusskühler, Gaseinlass, Temperaturfühler und KPG-Rührer werden unter Stickstoffatmosphäre 75,00 g Polyether B und 0,06 g 2,6-Di-tert-butyl-4-methylphenol vorgelegt. Unter Rühren wird 40°C erwärmt und 0,13 g Trifluormethansulfonsäure zugegeben. Man erwärmt auf 80°C und dosiert unter Rühren 41,72 g 3-Ethyl-3-methyloloxetan mit einer Rate von 0,5 mL/min zu und rührt nach erfolgter Zudosierung weitere 3 h bei 80°C (vollständiger Umsatz von 3-Ethyl-3-methyloloxetan, Nachweis über ¹H-NMR-Spektroskopie). Man kühlt auf 60°C ab, setzt dann 0,65 g Amberlyst A-21 zu und rührt 1 h bei 60°C. Hiernach wird der Ionenaustauscher durch Filtration abgetrennt. Das erhaltene Zwischenprodukt (OH-Zahl: 353) ist eine bei Raumtemperatur trübe, farblose, mittelviskose Flüssigkeit.

### Stufe 2:

In einem Rundkolben mit Rückflusskühler, Gaseinlass, Temperaturfühler und KPG-Rührer werden unter Stickstoffatmosphäre 50,00 g des Produkts aus Stufe 1, 31,46 g Bernsteinsäureanhydrid und 0,16 g K₂CO₃ vorgelegt. Unter Rühren wird auf 100°C erwärmt und 4 h bei dieser Temperatur weitergerührt (Produkt: klare, gelbliche, mittelviskose Flüssigkeit, 100%-ig).

### Vermittleradditiv 37:

### Stufe 1:

In einem Rundkolben mit Rückflusskühler, Gaseinlass, Temperaturfühler und KPG-Rührer werden unter Stickstoffatmosphäre 30,00 g Polyether B und 0,06 g 2,6-Di-tert-butyl-4-methylphenol vorgelegt. Unter Rühren wird 40°C erwärmt und 0,13 g Trifluormethansulfonsäure zugegeben. Man erwärmt auf 80°C und dosiert unter Rühren eine Mischung aus 25,02 g 3-Ethyl-3-methyloloxetan und 56,30 g Oxetan X mit einer Rate von 1,0 mL/min zu und rührt nach erfolgter Zudosierung weitere 4 h bei 80°C (vollständiger Umsatz von 3-Ethyl-3-methyloloxetan und Oxetan X, Nachweis über ¹H-NMR-Spektroskopie). Man kühlt auf 60°C ab, setzt dann 0,65 g Amberlyst A-21 zu und rührt 1 h bei 60°C. Hiernach wird der Ionenaustauscher durch Filtration abgetrennt. Das erhaltene Zwischenprodukt (OH-Zahl: 302) ist eine bei Raumtemperatur leicht trübe, farblose, mittelviskose Flüssigkeit.

### Stufe 2:

In einem Rundkolben mit Rückflusskühler, Gaseinlass, Temperaturfühler und KPG-Rührer werden unter Stickstoffatmosphäre 50,00 g des Produkts aus Stufe 1, 26,91 g Bernsteinsäureanhydrid und 0,16 g K₂CO₃ vorgelegt. Unter Rühren wird auf 100°C erwärmt und 4 h bei dieser Temperatur weitergerührt (Produkt: klare, gelbliche, mittelviskose Flüssigkeit, 100%-ig).

### Vermittleradditiv 38:

In einem Rundkolben mit Rückflusskühler, Gaseinlass, Temperaturfühler und KPG-Rührer werden 45,16 g Polyether D und 14,66 g Phthalsäureanhyrid sowie 0,10 g Kaliumcarbonat, 0,10 g 2,6-Di-tert-butyl-4-methylphenol und 0,10 g 4-Methoxyphenol in 39,88 g 1-Methoxy-2-propylacetat vorgelegt. Unter Rühren wird auf 120°C erwärmt und 4 h bei dieser Temperatur gerührt. Man erhält als Produkt eine klare, niederviskose Flüssigkeit (60%-ige Lösung der Wirksubstanz in 1-Methoxy-2-propylacetat).

### Vermittleradditiv 39:

### Stufe 1:

In einem Rundkolben mit Rückflusskühler, Gaseinlass, Temperaturfühler und KPG-Rührer werden unter Stickstoffatmosphäre 68,42 g der Stufe 1 der Herstellung von Vermittleradditiv 23, 7,20 g Methacrylsäureanhydrid, 0,10 g K₂CO₃, 0,16 g 2,6-Di-tert-butyl-4-methylphenol, 0,16 g 4-Methoxyphenol, 0,05 g 4-Hydroxy-2,2,6,6-tetramethylpiperidin-n-oxyl und 23,34 g 1-Methoxy-2-propylacetat vorgelegt. Unter Rühren wird auf 120°C erwärmt und 4 h bei dieser Temperatur weitergerührt; hiernach ist kein Anhydrid mehr im Reaktionsgemisch feststellbar. Es werden 0,55 g Titandiisopropoxy-bis(acetylacetonat) zugesetzt und 10 h lang bei 160°C gerührt. Produkt: klar-leicht trübe, braune, hochviskose Flüssigkeit (72%-ige Anlösung in 1-Methoxy-2-propylacetat, OH-Zahl: 219).

### Stufe 2:

In einem Rundkolben mit Rückflusskühler, Gaseinlass, Temperaturfühler und KPG-Rührer werden 53,97 g des Produkts aus Stufe 1, 21,07 g Bernsteinsäureanhyrid sowie 0,10 g Kaliumcarbonat in 24,86 g 1-Methoxy-2-propylacetat vorgelegt. Unter Rühren wird auf 120°C erwärmt und 4 h bei dieser Temperatur gerührt. Man erhält als Produkt eine klare, braune, mittelviskose Flüssigkeit (60%-ige Lösung der Wirksubstanz in 1-Methoxy-2-propylacetat).

### Vermittleradditiv 40:

In einem Rundkolben mit Rückflusskühler, Gaseinlass, Temperaturfühler und KPG-Rührer werden unter Stickstoffatmosphäre 50,00 g Polyether F und 16,36 g Bernsteinsäureanhyrid sowie 0,11 g Kaliumcarbonat, 0,11 g 2,6-Di-tert-butyl-4-methylphenol und 0,11 g 4-Methoxyphenol in 44,46 g 1-Methoxy-2-propylacetat vorgelegt. Unter Rühren wird auf 110°C erwärmt und 5 h bei dieser Temperatur gerührt. Man erhält als Produkt eine klare, farblose, niederviskose Flüssigkeit (60%-ige Lösung der Wirksubstanz in 1-Methoxy-2-propylacetat).

### Vermittleradditiv 41:

In einem Rundkolben mit Rückflusskühler, Gaseinlass, Temperaturfühler und KPG-Rührer werden unter Stickstoffatmosphäre 50,00 g Polyether F und 13,64 g Bernsteinsäureanhyrid sowie 0,11 g Kaliumcarbonat, 0,11 g 2,6-Di-tert-butyl-4-methylphenol und 0,11 g 4-Methoxyphenol in 42,65 g 1-Methoxy-2-propylacetat vorgelegt. Unter Rühren wird auf 110°C erwärmt und 5 h bei dieser Temperatur gerührt. Man erhält als Produkt eine klare, farblose, niederviskose Flüssigkeit (60%-ige Lösung der Wirksubstanz in 1-Methoxy-2-propylacetat).

### Vermittleradditiv 42:

In einem Rundkolben mit Rückflusskühler, Gaseinlass, Temperaturfühler und KPG-Rührer werden unter Stickstoffatmosphäre 50,00 g Polyether F und 9,09 g Bernsteinsäureanhyrid und 8,91 g Maleinsäureanhydrid sowie 0,11 g Kaliumcarbonat, 0,11 g 2,6-Di-tert-butyl-4-methylphenol und 0,11 g 4-Methoxyphenol in 45,45 g 1-Methoxy-2-propylacetat vorgelegt. Unter Rühren wird auf 110°C erwärmt und 5 h bei dieser Temperatur gerührt. Man erhält als Produkt eine klare, farblose, niederviskose Flüssigkeit (60%-ige Lösung der Wirksubstanz in 1-Methoxy-2-propylacetat).

Vergleichsbeispiel VG-1: (gemäß British Polymer J. 1979, 11, 199) 3-Methacryloyloxypropyltrimethoxysilan

Vergleichsbeispiel VG-2a: (niedermolekulares Vergleichsprodukt mit Carbonsäuregruppe und Methacrylatgruppe) Methacrylsäure

Vergleichsbeispiel VG-2b: (niedermolekulares Vergleichsprodukt mit Carbonsäuregruppe und Acrylatgruppe) Acrylsäure

Vergleichsbeispiel VG-3: (gemäß J. Material Research 2009, 24, 1553) Mono-2-(methacryloxy)ethylsuccinat, 60%-ig angelöst in 1-Methoxy-2-propylacetat

### Vergleichsbeispiel VG-4: (gemäß WO 2008/049840)

20,00 g Hydroxyethylmethacrylat, 0,10 g 2,6-Di-tert-butyl-p-kresol, 0,10 g 4-Methoxyphenol, 45,47 g Dodecylbernsteinsäureanhydrid und 0,14 g Kaliumcarbonat werden in einem Rundkolben mit Rückflusskühler, Temperaturfühler und KPG-Rührer vorgelegt. Unter Rühren wird auf 100°C erwärmt und 6 h bei dieser Temperatur gerührt. Man erhält als Produkt eine klare braune, viskose Flüssigkeit.

### Vergleichsbeispiel VG-5a: (gemäß WO 2008/049840)

43,69 g 1-Methoxy-2-propylacetat, 50,00 g SMA-Harz 2000 (Styrol-Maleinsäureanhydrid-Copolymer, erhältlich von der Firma Cray Valley) und 0,14 g 2,6-Di-tert-butyl-p-kresol werden in einem Rundkolben mit Rückflusskühler, Temperaturfühler und KPG-Rührer vorgelegt. Unter Rühren wird auf 120°C erwärmt und nach 30 min hat sich das SMA-Harz vollständig gelöst. Es werden 15,54 g Allylglycol innerhalb von 20 min zugetropft und danach weitere 2 h bei 120°C sowie 5 h bei 140°C gerührt. Man erhält als Produkt eine klare, braune, mittelviskose Flüssigkeit (60%-ige Lösung der Wirksubstanz in 1-Methoxy-2-propylacetat).

### Vergleichsbeispiel VG-5b: (gemäß WO 2008/049840)

68,91 g 1-Methoxy-2-propylacetat, 50,00 g SMA-Harz 1000 (Styrol-Maleinsäureanhydrid-Copolymer, erhältlich von der Firma Cray Valley), 18,91 g Allylglycol, 0,07 g p-Toluolsulfonsäure und 0,07 g 2,6-Di-tert-butyl-p-kresol werden in einem Rundkolben mit Rückflusskühler, Temperaturfühler und KPG-Rührer vorgelegt. Es wird 6 h bei 140°C gerührt. Man erhält als Produkt eine klare, braune, mittelviskose Flüssigkeit (60%-ige Lösung der Wirksubstanz in 1-Methoxy-2-propylacetat).

### Vergleichsbeispiel VG-5c: (gemäß WO 2008/049840)

41,91 g n-Butylacetat, 30,00 g SMA-Harz 2000 (Styrol-Maleinsäureanhydrid-Copolymer, erhältlich von der Firma Cray Valley), 0,08 g Dodecylbenzolsulfonsäure und 0,08 g 2,6-Di-tert-butyl-p-kresol werden in einem Rundkolben mit Rückflusskühler, Temperaturfühler und KPG-Rührer vorgelegt. Unter Rühren wird auf 100°C erwärmt und nach 10 min hat sich das SMA-Harz vollständig gelöst. Es werden 11,91 g Hydroxyethylmethacrylat innerhalb von 15 min zugetropft und danach weitere 6 h bei 100°C gerührt. Man erhält als Produkt eine klare, gelbe, mittelviskose Flüssigkeit (50%-ige Lösung der Wirksubstanz in n-Butylacetat).

### Vergleichsbeispiel VG-5d: (gemäß WO 2008/049840)

44,48 g n-Butylacetat, 30,00 g SMA-Harz 1000 (Styrol-Maleinsäureanhydrid-Copolymer, erhältlich von der Firma Cray Valley), 0,08 g Dodecylbenzolsulfonsäure und 0,08 g 2,6-Di-tert-butyl-p-kresol werden in einem Rundkolben mit Rückflusskühler, Temperaturfühler und KPG-Rührer vorgelegt. Unter Rühren wird auf 100°C erwärmt und nach 10 min hat sich das SMA-Harz vollständig gelöst. Es werden 14,48 g Hydroxyethylmethacrylat innerhalb von 15 min zugetropft und danach weitere 6 h bei 100°C gerührt. Man erhält als Produkt eine klare, gelbe, mittelviskose Flüssigkeit (50%-ige Lösung der Wirksubstanz in n-Butylacetat).

### II Anwendung der Vermittleradditive

Die nachfolgende Angabe von "Teilen" bezieht sich stets auf Gewichtsteile.

**Tab. 2: In den Anwendungsbeispielen eingesetzte Rohstoffe.**

| *Name* | *Hersteller* | *Beschreibung* |
|---|---|---|
| Degalan LP 51/03 | Evonik | PMMA-Perlpolymerisat auf Basis von Methylmethacrylat (T_{g}=121°C) |
| MMA | BASF | Methylmethacrylat |
| EGDMA | Merck | Ethylenglykoldimethacrylat |
| Pergaquick A 150 | Pergan GmbH | N-N-Bis(2-hydroxyethyl)-p-toluidin |
| BYK-A 515 | BYK-Chemie GmbH | Entlüfter; Lösung schaumzerstörender Polymere, silikonfrei |
| Peroxan BP-Pulver 50W | Pergan GmbH | Dibenzoylperoxid, 50%-ig in Dicyclohexyladipat |
| Alcan Onyx Premier OP-25 | Alcan Chemicals Ltd. | reinweißes, kristallines, rieselfähiges Aluminiumtrihydroxid, durchschnittliche Partikelgröße gemäß Datenblatt: 25 µm |
| Alcan WP-31 Onyx Premier | Alcan Chemicals Ltd. | rieselfähiges Aluminiumtrihydroxid, durchschnittliche Partikelgröße gemäß Datenblatt: 35-45 µm |
| Martinal ON-4608 | Albermarle Corp. | Aluminiumtrihydroxid, Partikelgröße gemäß Datenblatt: d10 µm: 1.0 - 3.0 / d50 µm: 7.0 - 10.0 / d90 µm: 16.0 - 24.0 |
| Carolith 0,2-0,5 NP | Omya GmbH, Köln | Weiße Calciumcarbonat-Körnungen, hergestellt aus natürlichem Marmor; Siebdurchgang bei entsprechender Sieböffnung: 5% bei 0,1 mm / 94% bei 0,5 mm |
| Carolith 0,5-1,0 NP | Omya GmbH, Köln | Weiße Calciumcarbonat-Körnungen, hergestellt aus natürlichem Marmor; Siebdurchgang bei entsprechender Sieböffnung: 25% bei 0,5 mm / 97% bei 1,0 mm |
| Durcal 10 | Omya GmbH, Köln | feines und weißes Calciumcarbonat hoher chemischer Reinheit, mittl. Teilchendurchmesser (D50%): 9 µm |

### (IIa) Herstellung der Probenkörper in einem Aluminiumhydroxid-gefüllten Acrylatharz-System

Zuerst wird das Acrylat-Grundharz ("Acrylat Syrup") hergestellt. Dazu werden 80 Teile MMA mit 20 Teilen Degalan LP 51/03 (PMMA-Granulat) gemischt und gelöst; der Lösungsprozess wird durch 48-stündiges permanentes Bewegen der MMA/PMMA-Mischung in einer verschlossenen 2,5-L-Braunglasflasche auf einer Rollenbank (Kugeltopfmühlenaggregat, Fa. H. Welter) durchgeführt.
Später wird dieser Syrup (i) mit den in Tab. 3 genannten anderen Komponenten (ii bis vi) gemischt:

**Tabelle 3: Zusammensetzung der eingesetzten Harz/Füllstoff-Mischung in A TH-gefüllten Systemen.**

| | | |
|---|---|---|
| I | Acrylat Syrup | 100 |
| ii | EGDMA | 3 |
| iii | BYK-A 515 | 0,5 |
| iv | Pergaquick A 150 | 0,5 |
| v | Peroxan BP Pulver 50 W | 1,5 |
| vi | Aluminiumhydroxid (ATH) | 150 |

### Messung der Biegefestigkeit

(Mengenanteile gemäß Tabelle 3)

### Beispiel (kein Vermittleradditiv, Vergleichsbeispiel):

Der Syrup (Komponente (i)) wird vorgelegt und die in Tab. 3 genannten Komponenten (ii) bis (v) in Rezepturreihenfolge zugewogen und mit einem Spatel vermischt. Anschließend wird das ATH (Komponente (vi)) zugewogen, von Hand eingerührt und anschließend 1/2 Minute bei 930 UPM mit einem Dissolver (Modell Pendraulik, Typ TD-100, Zahnscheibe 40 mm) verrührt.

Diese Füllstoff/Harz-Mischung wird in eine flache Form aus Melaminharz (Abmessungen: 107 mm x 205 mm x 15 mm) gegossen. Die Aushärtung zu einer Platte erfolgt bei Raumtemperatur für 1 Stunde. Anschließend wird die Platte noch 24 Stunden bei 80°C gelagert. Nach dem vollständigen Aushärten werden aus der Platte mit einer Diamantsäge Probenkörper geschnitten, welche der Prüfnorm DIN EN ISO 178 entsprechen (Abmessung des Prüfkörpers: 80 mm x 15 mm, Dicke 6 mm). Die Biegefestigkeit wird mit einer Universalprüfmaschine Typ 1465 der Firma Zwick gemessen.

### Beispiel (mit Vermittleradditiv):

Es wird genauso verfahren wie bei der zuvor genannten Herstellung der Probenkörper ohne Vermittleradditiv. Zusätzlich wird die in Tabellen 4, 5 bzw. 6 angegebene Menge des betreffenden Vermittleradditivs vor der Homogenisierung der Mischungskomponenten im Dissolver zugegeben.

### System I

ATH-Type: Alcan WP-31

**Tab. 4: Bestimmung der Biegefestigkeit von Probenkörpern mit dem Füllstoff Alcan WP-31.**

| Additiv | Einsatzmenge in %* | Biegefestigkeit in N/mm² | Verbesserung gg. Nullprobe |
|---|---|---|---|
| **--** | --- | 44 | **--** |
| 3 | 1,00 | 59 | +34% |
| 4 | 1,00 | 60 | +36% |
| 5 | 1,00 | 58 | +32% |
| 6 | 0,60 (1,00) | 64 | +45% |
| 6 | 0,45 (0,75) | 63 | +44% |
| 6 | 0,30 (0,50) | 62 | +41% |
| 6 | 0,15 (0,25) | 61 | +39% |
| 6a | 0,60 (1,00) | 55 | +25% |
| 7 | 0,60 (1,00) | 56 | +27% |
| 25 | 1,00 | 60 | + 36% |
| VG-5a | 0,60 (1,00) | 45 | + 2% |
| VG-5b | 0,60 (1,00) | 48 | +9% |
| VG-5c | 0,50 (1,00) | 48 | +9% |
| VG-5d | 0,50 (1,00) | 44 | +/-0 |

| | | | |
|---|---|---|---|
| *) *berechnet in Gew. % des polymeren Vermittleradditivs, bezogen auf die Masse des eingesetzten Aluminiumhydroxids (in Klammern: Einsatzmenge der Vermittleradditiv-Anlösung aus dem Reaktionsansatz, falls das Additiv nicht in 100%-iger Form hergestellt wurde)* | | | |

Anhand der Ergebnisse ist erkennbar, dass die Biegefestigkeit des ausgehärteten Probenkörpers durch Zusatz der Vermittleradditive in den beschriebenen Mengen signifikant erhöht wird. Der Vergleich mit den durch Zusatz der Vergleichsprodukte VG-5a, -5b, -5c und -5d erreichten entsprechenden Werten zeigt außerdem, dass die Verbesserung der Biegefestigkeit ausgeprägter ist als mit den betreffend bekannten Vermittleradditiven. Die mit dem Vermittleradditiv 6 durchgeführte Konzentrationsreihe zeigt zudem, dass auch bei verhältnismäßig niedriger Dosierung des Vermittleradditivs eine deutliche Verbesserung der Biegefestigkeit erreicht wird.

### System II

ATH-Type: Alcan OP-25

**Tab. 5: Bestimmung der Biegefestigkeit von Probenkörpern mit dem Füllstoff Alcan OP-25.**

| Additiv | Einsatzmenge * | Biegefestigkeit in N/mm² | Verbesserung gg. Nullprobe |
|---|---|---|---|
| -- | -- | 50 | -- |
| 5 | 1,00 | 60 | + 20% |
| 6 | 0,60 (1,00) | 72 | + 44% |
| 6b | 0,60 (1,00) | 78 | + 56% |
| 6c | 0,75 (1,00) | 71 | + 42% |
| 8 | 1,00 | 56 | + 12% |
| 9 | 1,00 | 64 | + 28% |
| 10 | 0,75 (1,00) | 62 | + 24% |
| 11 | 1,00 | 60 | + 20% |
| 12 | 0,60 (1,00) | 61 | + 22% |
| 13 | 0,60 (1,00) | 75 | + 50% |
| 14 | 0,60 (1,00) | 80 | + 60% |
| 15 | 0,60 (1,00) | 75 | + 50% |
| 16 | 0,60 (1,00) | 82 | + 64% |
| 17 | 0,60 (1,00) | 67 | + 34% |
| 20 | 0,60 (1,00) | 69 | + 38% |
| 23 | 0,60 (1,00) | 72 | + 44% |
| 24 | 0,60 (1,00) | 80 | + 60% |
| 25 | 0,60 (1,00) | 67 | + 34% |
| 26 | 0,60 (1,00) | 64 | + 28% |
| 29 | 0,60 (1,00) | 73 | + 46% |
| 30 | 0,60 (1,00) | 70 | + 40% |
| 33 | 0,60 (1,00) | 65 | + 30% |
| 34 | 0,60 (1,00) | 74 | + 48% |
| 36 | 1,00 | 58 | + 16% |
| 37 | 1,00 | 60 | + 20% |
| 39 | 0,60 (1,00) | 73 | + 46% |
| VG-1 | 1,00 | 53 | +6 % |
| VG-2a | 1,00 | 53 | + 6% |
| VG-2b | 1,00 | 54 | +8% |
| VG-3 | 0,60 (1,00) | 53 | + 6% |
| VG-4 | 1,00 | 52 | +4% |

| | | | |
|---|---|---|---|
| *) *berechnet in Gew. % des polymeren Vermittleradditivs, bezogen auf die Masse des eingesetzten Aluminiumhydroxids (in Klammern: Einsatzmenge der Vermittleradditiv-Anlösung aus dem Reaktionsansatz, falls das Additiv nicht in 100%-iger Form hergestellt wurde)* | | | |

Auch anhand dieser Ergebnisse wird sichtbar, dass die Biegefestigkeit des ausgehärteten Probenkörpers durch Zusatz der Vermittleradditive in den beschriebenen Mengen signifikant erhöht wird. Der Vergleich mit den durch Zusatz der Vergleichsprodukte VG-1, -2a, -2b, -3 und -4 erreichten entsprechenden Werten zeigt außerdem, dass die Verbesserung der Biegefestigkeit deutlich ausgeprägter ausfällt als mit den betreffend bekannten Vermittleradditiven.

### System III

ATH-Type: Martinal ON-4608

**Tab. 6: Bestimmung der Biegefestigkeit von Probenkörpern mit dem Füllstoff Martinal ON-4608.**

| Additiv | Einsatzmenge * | Biegefestigkei t in N/mm² | Verbesserun g gg. Nullprobe |
|---|---|---|---|
| -- | -- | 49 | -- |
| 6 | 0,60 (1,00) | 74 | + 51% |
| 14 | 0,60 (1,00) | 70 | + 42% |
| 24 | 0,60 (1,00) | 71 | + 44% |
| 25 | 0,60 (1,00) | 73 | + 49% |

| | | | |
|---|---|---|---|
| **) berechnet in Gew. % des polymeren Vermittleradditivs, bezogen auf die Masse des eingesetzten Aluminiumhydroxids (in Klammern: Einsatzmenge der Vermittleradditiv-Anlösung aus dem Reaktionsansatz, falls das Additiv nicht in 100%-iger Form hergestellt wurde)* | | | |

### (IIb) Herstellung der Probenkörper in einem CaCO₃-gefüllten Acrylatharz-System

Zuerst wird das Acrylat-Grundharz ("Acrylat Syrup") hergestellt. Dieses entspricht der unter (IIa) genannten Zusammensetzung.
Später wird dieser Syrup (i) mit den in Tab. 7 genannten anderen Komponenten (ii bis viii) gemischt:

**Tabelle 7: Zusammensetzung der eingesetzten Harz/Füllstoff-Mischung in CaCO₃-gefüllten Systemen.**

| | | |
|---|---|---|
| i | Acrylat Syrup | 100 |
| ii | EGDMA | 1,5 |
| iii | BYK-A 515 | 0,25 |
| iv | Pergaquick A 150 | 0,25 |
| v | Peroxan BP Pulver 50 W | 0,75 |
| vi | Carolith 0,2-0,5 NP | 145,4 |
| vii | Carolith 0,5-1,0 NP | 274,8 |
| viii | Durcal 10 | 113,2 |

### Messung der Biegefestigkeit

(Mengenanteile gemäß Tab. 7)

### Beispiel (kein Vermittleradditiv, Vergleichsbeispiel):

Der Syrup (Komponente (i)) wird vorgelegt und die in Tab. 7 genannten Komponenten (ii) bis (v) in Rezepturreihenfolge zugewogen und mit einem Spatel vermischt. Anschließend werden die drei CaCO₃-Type (Komponenten (vi) bis (viii)) zugewogen, von Hand eingerührt und anschließend 1/2 Minute bei 930 UPM mit einem Dissolver (Modell Pendraulik, Typ TD-100, Zahnscheibe 40 mm) verrührt. Diese Füllstoff/Harz-Mischung wird in eine flache Form aus Melaminharz (Abmessungen: 107 mm x 205 mm x 15 mm) gegossen. Die Aushärtung zu einer Platte erfolgt bei Raumtemperatur für 1 Stunde. Anschließend wird die Platte noch 24 Stunden bei 80°C gelagert. Nach dem vollständigen Aushärten werden aus der Platte mit einer Diamantsäge Probenkörper geschnitten, welche der Prüfnorm DIN EN ISO 178 entsprechen (Abmessung des Prüfkörpers: 80 mm x 15 mm, Dicke 6 mm). Die Biegefestigkeit wird mit einer Universalprüfmaschine Typ 1465 der Firma Zwick gemessen.

### Beispiel (mit Vermittleradditiv):

Es wird genauso verfahren wie bei der zuvor genannten Herstellung der Probenkörper ohne Vermittleradditiv. Zusätzlich wird die in Tabelle 8 angegebene Menge des betreffenden Vermittleradditivs vor der Homogenisierung der Mischungskomponenten im Dissolver zugegeben.

### System V

CaCO₃ in Syrup, Mischung dreier CaCO₃-Typen gemäß Tabelle 7

**Tab. 8: Bestimmung der Biegefestigkeit von Probenkörpern mit CaCO₃ als Füllstoff.**

| Additiv | Einsatzmenge * | Biegefestigkeit in N/mm² | Verbesserung gg. Nullprobe |
|---|---|---|---|
| -- | -- | 28,7 | -- |
| VG-1 | 1,00 | 29,6 | +3% |
| 6 | 0,60 (1,00) | 38,7 | + 35% |
| 6 | 0,18 (0,30) | 37,7 | + 31% |
| 13 | 0,6 (1,00) | 36,6 | + 28% |
| 14 | 0,6 (1,00) | 35,1 | + 22% |
| 16 | 0,6 (1,00) | 32,3 | + 13% |
| 29 | 0,6 (1,00) | 36,2 | + 26% |
| 39 | 0,6 (1,00) | 32,6 | + 14% |

| | | | |
|---|---|---|---|
| *) *berechnet in Gew. % des polymeren Vermittleradditivs, bezogen auf die Masse des gesamten eingesetzten Calciumcarbonats (in Klammern: Einsatzmenge der Vermittleradditiv-Anlösung aus dem Reaktionsansatz, falls das Additiv nicht in 100%-iger Form hergestellt wurde)* | | | |

Auch anhand der Ergebnisse mit Calciumcarbonat als Füllstoff wird deutlich, dass die Biegefestigkeit des ausgehärteten Probenkörpers durch Zusatz der Vermittleradditive in den beschriebenen Mengen signifikant erhöht wird. Die Ergebnisse mit Vermittleradditiv 6 zeigen, dass auch bei verhältnismäßig geringer Konzentration noch eine deutliche Verbesserung erzielt wird. Die als Vergleichsbeispiel gewählte niedermolekulare Verbindung VG-1 hingegen ist nahezu wirkungslos.

## Patentansprüche

1. Kompositzubereitung enthaltend
i) 0,01 bis 10,00 Gew.% einer Vermittleradditivkomponente (A),
ii) 5 bis 94 Gew.% einer Füllstoffkomponente (B) sowie
iii) 5 bis 94 Gew.% einer Bindemittelkomponente (C),
wobei die Vermittleradditivkomponente (A) eine die Strukturelemente D, P und E enthaltende, gemäß der allgemeinen Formel (I) vorliegende chemische Struktur aufweist
(l) [D]ₐ P [E]_{b}
mit
D gleich oder verschieden sowie repräsentiert durch einen eine ethylenisch ungesättigte Doppelbindung aufweisenden Rest, bevorzugt ausgewählt aus der Gruppe umfassend (D-I), (D-II), (D-III) sowie (D-IV) 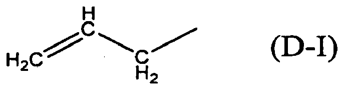 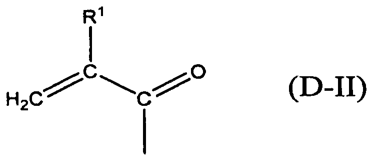 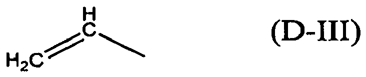 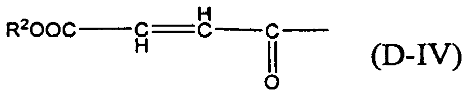
mit R¹ gleich oder verschieden sowie repräsentiert durch Wasserstoff oder CH₃ R² gleich oder verschieden sowie repräsentiert durch Wasserstoff oder einen verzweigten oder unverzweigten C₁-C₂₄-Alkylrest,
a gleich oder verschieden sowie repräsentiert durch eine ganze Zahl von 1 bis 50,
E gleich oder verschieden sowie repräsentiert durch Wasserstoff und/ oder einen eine COOH-Gruppe aufweisenden Rest, bevorzugt ausgewählt aus der Gruppe umfassend (B-I), (B-II), (B-III) sowie (B-IV) 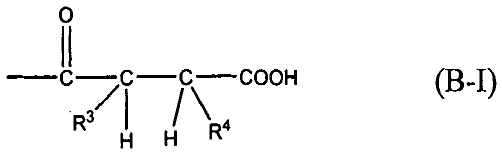 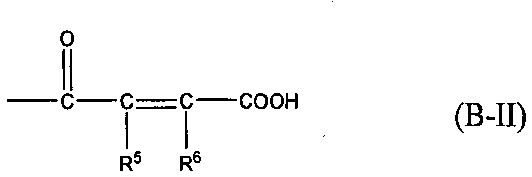 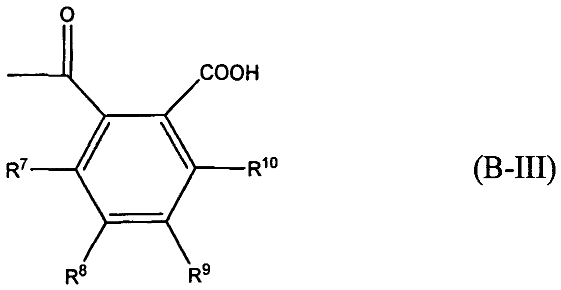
-CH₂-COOH (B-IV)
mit R³ und R⁴ jeweils gleich oder verschieden sowie repräsentiert durch Wasserstoff oder einen verzweigten oder unverzweigten C₁-C₁₂-Alkylrest; R⁵ und R⁶ jeweils gleich oder verschieden sowie repräsentiert durch Wasserstoff oder einen verzweigten oder unverzweigten C₁-C₁₂-Alkylrest; R⁷, R⁸, R⁹ und R¹⁰ jeweils gleich oder verschieden sowie repräsentiert durch Wasserstoff, COOH oder einen verzweigten oder unverzweigten C₁-C₁₂-Alkylrest,
b gleich oder verschieden sowie repräsentiert durch eine ganze Zahl von 1 bis 50,
P gleich oder verschieden sowie repräsentiert durch einen verzweigten oder unverzweigten organischen Hauptrest, welcher mindestens zwei innerhalb dieses Hauptrestes nicht endständige Ethersauerstoffatome enthält,
wobei der P repräsentierende organische Hauptrest zusätzlich endständige Sauerstoffatome aufweist, die Strukturelemente D und E jeweils unmittelbar an diese endständigen Sauerstoffatome gebunden sind und maximal 70 Mol % der gesamten Strukturelemente E in der chemischen Struktur gemäß der allgemeinen Formel (I) durch H-Atome repräsentiert werden.

2. Kompositzubereitung nach Anspruch 1 enthaltend
i) 0,1 bis 4,0 Gew.% der Vermittleradditivkomponente (A),
ii) 15 bis 84 Gew.% der Füllstoffkomponente (B) sowie
iii) 15 bis 84 Gew.% der Bindemittelkomponente (C).

3. Kompositzubereitung nach Anspruch 1 oder 2, **dadurch gekennzeichnet, daß** in der die
chemische Struktur der Vermittleradditivkomponente (A) beschreibenden allgemeinen
Formel (I)
D bevorzugt als (D-II) und/ oder (D-IV) vorliegt, a durch eine ganze Zahl von 1 bis 8 repräsentiert wird, der die COOH-Gruppe aufweisende Rest bevorzugt als (B-I) und/ oder (B-II) vorliegt, b durch eine ganze Zahl von 1 bis 15 repräsentiert wird, wobei maximal 50, bevorzugt maximal 30, besonders bevorzugt maximal 15 Mol% der gesamten Strukturelemente E in der chemischen Struktur gemäß der allgemeinen Formel (I) durch H-Atome repräsentiert werden und der P repräsentierende organische Hauptrest ein Molekulargewicht von wenigstens 200 aufweist sowie mindestens zwei der innerhalb des Hauptrestes nicht endständigen Ethersauerstoffatome über ein verbrückendes lineares C₂-C₅-Alkylengruppensegment einer unverzweigten oder verzweigten Alkylengruppe miteinander verbunden sind.

4. Kompositzubereitung nach einem der Ansprüche 1 bis 3, **dadurch gekennzeichnet, daß** die Gesamtmenge oder eine Teilmenge der Vermittleradditivkomponente (A) in Form von Verbindungen (A') vorliegt, in denen der das Strukturelement P repräsentierende organische Hauptrest Struktureinheiten aufweist, welche durch ringöffnende Polymerisation von 3 bis 6 Ringatome enthaltenden zyklischen Ethern erhältlich sind, wobei der organische Hauptrest optionalerweise zusätzlich weitere Struktureinheiten aufweist, die durch ringöffnende Polymerisation von 5 bis 7 Ringatomen enthaltenden Lactonen herstellbar sind.

5. Kompositzubereitung nach Anspruch 4, **dadurch gekennzeichnet, daß** die Verbindungen
(A') jeweils Struktursegmente der allgemeinen Formel (II) aufweisen 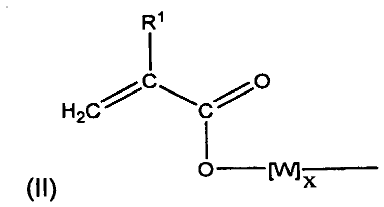 mit
R¹ gleich oder verschieden sowie repräsentiert durch H oder CH₃
W gleich oder verschieden sowie repräsentiert durch eine sich wiederholende Struktureinheit,
x gleich oder verschieden sowie repräsentiert durch eine ganze Zahl von 3 bis 100,
wobei die sich wiederholende Struktureinheit W erhältlich ist durch ringöffnende Polymerisation eines zyklischen Ethers, ausgewählt aus der Gruppe umfassend (W-I), (W-II), (W-III), (W-IV) sowie (W-V) 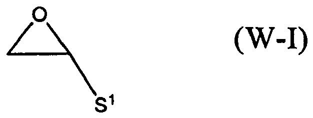 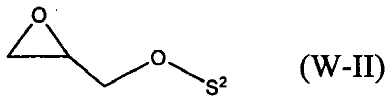 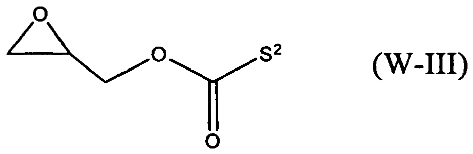 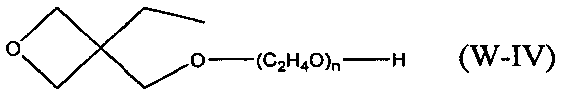 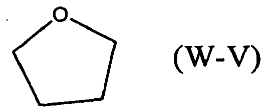 mit
S¹ gleich oder verschieden sowie repräsentiert durch H, einen linearen oder verzweigten C₁ bis C₂₄-Alkylrest, einen C₆ bis C₁₈-Arylrest, oder einen C₆ bis C₁₈- Arylalkylrest, bevorzugt repräsentiert durch H, CH₃, C₂H₅ oder C₆H₅,
S² gleich oder verschieden sowie repräsentiert durch H, einen linearen oder verzweigten C₁ bis C₂₄-Alkylrest, einen C₆ bis C₁₈-Arylrest, oder einen C₆ bis C₁₈- Arylalkylrest, bevorzugt repräsentiert durch H, C₉ bis C₁₈-Alkyl- oder C₆H₅,
n gleich oder verschieden sowie repräsentiert durch eine ganze Zahl von 0 bis 10.

6. Kompositzubereitung nach einem der Ansprüche 1 bis 5, **dadurch gekennzeichnet, dass** die Vermittleradditivkomponente (A) herstellbar ist mittels eines die Schritte i) sowie ii) aufweisendes Verfahrens, in welchem
in Schritt i) hydroxyfunktionelle Vorprodukte durch ringöffnende Polymerisation von optionalerweise durch Hydroxylgruppen substituierten Oxetanen erzeugt werden, wobei die ringöffnende Polymerisation unter Umsetzung einer mindestens eine Hydroxylgruppe aufweisenden, ethylenisch-ungesättigten Verbindung erfolgt und
in Schritt ii) die hydroxyfunktionellen Vorprodukte mit cyclischen Carbonsäureanhydriden umgesetzt werden.

7. Kompositzubereitung nach einem der Anspruch 6, **dadurch gekennzeichnet, dass** die in Schritt i) eingesetzten Oxetane jeweils in Form von durch Hydroxylgruppen substituierten Oxetanen vorliegen, für die in Schritt i) verwendeten mindestens eine Hydroxylgruppe aufweisenden, ethylenisch-ungesättigten Verbindungen Hydroxyalkyl(meth)acrylatderivate und/ oder von Allylalkoholderivate gewählt werden und die in Schritt ii) eingesetzten zyklischen Carbonsäureanhydride als zyklisch aliphatische, mindestens 4 Kohlenstoffatome enthaltende Carbonsäuranhydride vorliegen.

8. Kompositzubereitung nach Anspruch 7, **dadurch gekennzeichnet, dass** die Hydroxyalkyl(meth)acrylatderivate durch Hydroxyalkyl(meth)acrylat als solches und/ oder mittels Alkoxylierung von Hydroxyalkyl(meth)acrylat herstellbaren, maximal 20 Alkoxystruktureinheiten enthaltenden Etherspezies, bevorzugt durch Hydroxyalkyl(meth)acrylat als solches, repräsentiert werden und die Allylalkoholderivate in Form von Allylalkohol als solches und/ oder mittels Alkoxylierung von Allylalkohol herstellbaren, maximal 20 Alkoxystruktureinheiten enthaltenden Etherspezies vorliegen.

9. Kompositzubereitung nach einem der Ansprüche 1 bis 8, **dadurch gekennzeichnet, dass** mindestens 60 Gew.% der Füllstoffkomponente (B) in Form von Füllstoffkomponentenspezies (B') vorliegt, die jeweils gemäß der DIN EN ISO 787-9 einen pH-Wert von mindestens 6,0 , bevorzugt von mindestens 7,5 aufweisen.

10. Kompositzubereitung nach einem der Ansprüche 1 bis 9, **dadurch gekennzeichnet, dass** mindestens 60 Gew.% der Füllstoffkomponente (B) in Form von Füllstoffkomponentenspezies (B') vorliegt, welche jeweils aufweisen Carbonate, Hydrogencarbonate, Sulfate und/oder Hydrogensulfate der Elemente Calcium, Magnesium und/oder Aluminium; und/oder Oxide, Hydroxide und/ oder Oxidhydroxide des Aluminiums; und/oder Glimmer und/ oder Alumosilicate und/ oder Talkum und/oder Kieselsäuren.

11. Kompositzubereitung nach einem der Ansprüche 1 bis 10, **dadurch gekennzeichnet, dass** die Bindemittelkomponente (C) mindestens 60 Gew.% mittels radikalischer Polymerisation und/oder radikalischer Vernetzung aushärtbare Duromervorprodukte (C') enthält, welche ausgewählt sind aus der Gruppe bestehend aus ethylenisch ungesättigte Polymere, (Meth)acrylharze, ethylenisch ungesättigten Monomere, radikalische Initiatoren und optionalerweise Vernetzer.

12. Kompositzubereitung nach einem der Ansprüche 1 bis 11, **dadurch gekennzeichnet, dass** die Bindemittelkomponente (C) zu mindestens 90 Gew.% Polymermatrixvorprodukt enthält, welches aus folgenden Bestandteilen besteht:
- (Meth)acrylharze und/ oder ungesättigte Polyesterharze,
- ethylenisch ungesättigte Monomere, vorzugsweise Styrol, substituierte Styrole, (Meth)acrylate und/ oder (Meth)acrylamide,
- sich als Radikalinitiator eignende Spezies, bevorzugt Peroxidverbindungen und
- optionalerweise Vernetzer ausgewählt aus di-, tri- und höherfunktionellen (Meth)acrylaten, Di-, Tri- und Polyvinyl-substituierten Benzolderivaten, di-, tri- und höherfunktionellen Vinyl- oder Allyl(poly)ethern.

13. Komposit herstellbar durch Härtung einer Kompositzubereitung gemäß einem der Ansprüche 1 bis 12.

14. Verwendung eines Komposits gemäß Anspruch 13 als Material für ein Formteil, welches bevorzugt vorliegt als Arbeitsplatte, Formteil für den Sanitärbereich, Rohr, Rinne, Schacht, Verbindungsstück, Segmentbauteil, Platte, Fliese, Bodensegment, Auskleidungssegment, Wand, Decke, Kunstmarmor, Rahmen, Behälter, Flasche, Becher, Schüssel, Dekorationsartikel, Spüle, Becken, Wanne, Trog oder Formteil für den Kraftfahrzeugs-, Flugzeugs- und Bootsbau.

15. Verwendung von in den Ansprüchen 3 bis 8 definierten Vermittleradditivkomponenten (A) zur Verbesserung der mechanischen Eigenschaften von Werkstoffen, die Grenzflächen zwischen organischen Polymeren und anorganischen Materialien mit basischen oder amphoteren Oberflächen gemäß DIN EN ISO 787-9 aufweisen.

## Claims

1. Composite preparation containing
i) 0.01 to 10.00 wt. % of an intermediary additive component (A),
ii) 5 to 94 wt.% of a filler component (B), and
iii) a binding component (C), 5-94 wt.%
whereby the intermediary additive component (A) has a chemical structure containing the structural elements of D, P and E, present in accordance with the general formula (I)
(I) [D].P[E]_{b}
with
D identical or different and represented by an ethylenically unsaturated double bond residue preferably selected from the group consisting of (DL), (D-II), (D-III) and (D-IV) 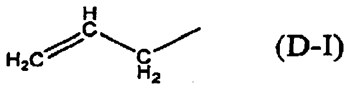 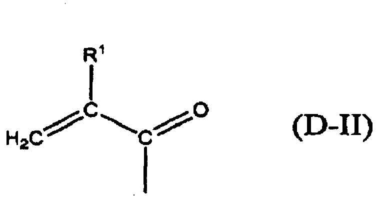 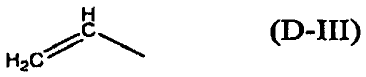 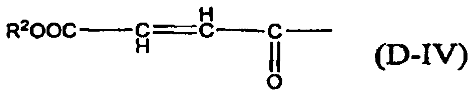 R¹-identical or different, and represented by hydrogen or CH₃; R² identical or different and represented by hydrogen or a branched or unbranched C1-C₂₄-Alkyl residue.
a identical or different and represented by an integer from 1 to 50.
E identical or different and represented by hydrogen and/or a-COOH group-containing residue, preferably selected from the group consisting of (BI), (B-II), (B-III) and (IV B) 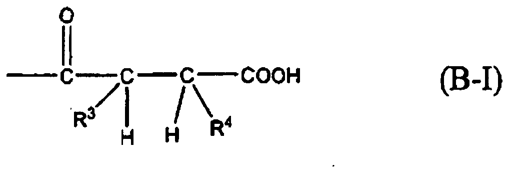 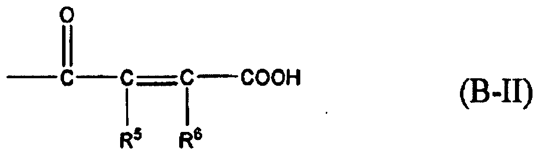 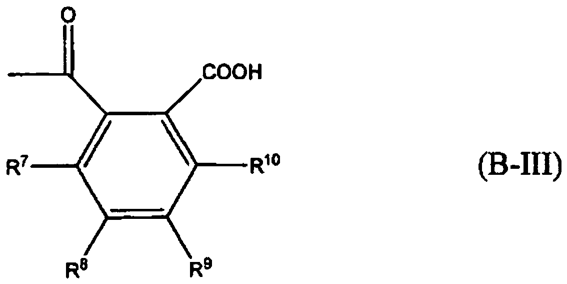
-CH₂-COOH (B-IV)
with R³ and R⁴ identical or different, and represented by hydrogen or a branched or unbranched C₁-C₁₂-Alkyl residue; R⁵ und R⁶ identical or different, and represented by hydrogen or a branched or unbranched C₁-C₁₂-Alkyl residue; R⁷, R⁸, R⁹ und R¹⁰ identical or different, and represented by hydrogen, COOH or a branched or unbranched C₁-C₁₂-Alkyl residue.
b identical or different and represented by an integer from 1 to 50.
P identical or different and represented by a branched or unbranched main organic residue, which contains at least two non-terminal ether oxygen atoms within this main residue.
whereby the main organic residue representing P has in addition terminal oxygen atoms, the structural elements D and E are each bonded directly to these terminal oxygen atoms and not more than 70 mol% of the total structural elements E in the chemical structure of the general formula (I) can be represented by hydrogen atoms.

2. Composite preparation according to claim 1, containing
i) 0.1 to 4.0 wt.% of the intermediary additive component (A),
ii) 15 to 84 wt.% of the filler component (B), and
iii) 15 to 84 wt.% of the binding component (C).

3. Composite preparation according to claim 1 or 2, **characterised by** the fact that in the general formula (I) describing the chemical structure of the intermediary additive component (A)
D is preferred as (D-II) and/or (D-IV), (A) is represented by a whole number from 1 to 8, the residue of the COOH group is present preferably as (B-I) and/or (B-II), b is represented by a whole number from 1 to 15, with maximum of 50 but a preferred maximum of 30, particularly preferably a maximum of 15 mol % of the entire structural elements E in the chemical structure in accordance with the general formula (I) can be represented by hydrogen atoms. P represents the main organic residue and has a molecular weight of at least 200, and at least two of the internal main organic non-terminal ether oxygen atoms are interconnected through a bridging linear C₂-C₅ alkyl group segment of an unbranched or branched alkyl group.

4. Composite preparation according to any one of claims 1 to 3, **characterised in that** the total quantity or a part quantity of the intermediary additive component (A) is present in the form of compounds (A'), in which the structural element P representing main organic residue structural units, which are available through ring-opening polymerization 3 to 6 ring atoms containing cyclic ethers, whereby the main organic residue optionally has in addition further structural units which can be prepared by lactones containing 5 to 7 ring atoms by ring-opening polymerization.

5. Composite preparation of claim 4, **characterised in that** the connections (A') each exhibit structural segments of the general formula (II) 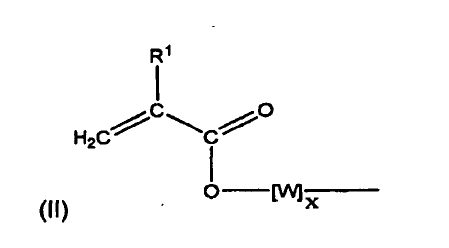 with
R¹ identical or different and represented by H or CH₃
W identical or different and represented by a repetitive structure unit.
x identical or different and represented by an integer from 3 to 100. 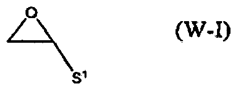 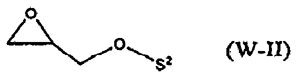 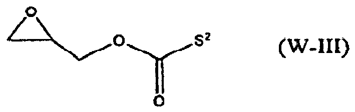 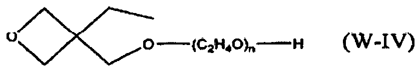 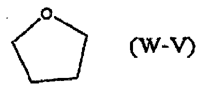 the repetitive structure unit W by ring-opening polymerization of cyclic selected from the group (W-I), (W-IL), (W-ill), (W-V) is available ethers, comprising (W-IV), and with
S¹ identical or different and represented by H, a linear or branched C₁-C₂₄-Alkyl residue, a C₆ to CIA-Aryl residue, or a C₆ to C₁₈-Aryl-alkyl residue, preferably represented by H, CH₃, C₂H₅ or C₆ H₅,
S² identical or different and represented by H, a linear or branched C₁ to C₂₄-Alkyl residue, a C₆ to C₁₈-Aryl residue, or a C₆ to C₁₈-Aryl-alkyl residue, preferably represented by H, C₉ to C₁₈-alkyl - or
n identical or different and represented by an integer from 0 to 10.

6. Composite preparation according to claims 1 to 5, **characterised in that** the agent additive component (A) is produced by means of the steps i) and ii) instructional procedure, in which
in step i) hydroxyl functional precursors are produced by ring-opening polymerization of oxetanes substituted optionally replaced by hydroxyl groups, whereby the ring-opening polymerization under implementation in ethylenically unsaturated connect with at least one hydroxyl group, and
in step ii) the hydroxy functional precursors are implemented with cyclic carboxylic acid hybrids.

7. Composite preparation according to one of claim 6, **characterised in that** the oxetanes used in step i) are each present in the form of hydroxyl-substituted oxetanes for the hydroxyalkyl (meth) acrylate derivatives in step i) with at least one hydroxyl-containing, ethylenically unsaturated compound and/or selected from allyl alcohol derivatives are present and the cyclic carboxylic anhydrides used in step ii) as a cyclic aliphatic, with carboxylic anhydrides containing at least 4 carbon atoms.

8. Composite preparation according to claim 7, **characterised in that** the hydroxy alkyl(meth)acrylate derivates of hydroxyalkyl(meth)acrylate as such and/or to be prepared by the alkoxylation of hydroxyl alkyl(meth)acrylate, with up to 20 alkoxy structural properties containing ether species, preferably hydroxy alkyl(meth)acrylate as such, represented in the form of allyl alcohol derivatives in the form of allyl alcohol as such and/or by alkoxylating of allyl alcohol manufacturable, with a maximum of 20 alkoxy structural properties containing ether species.

9. Composite preparation according to claims 1 to 8, **characterised in that** at least 60 wt.% of the filler component (B) in the form of filler component species (B') is present in each case in accordance with DIN EN ISO 787-9 with a pH of at least 6.0, preferably at least 7.5.

10. Composite preparation according to claims 1 to 9, **characterised in that** is at least 60 wt.% of the filler component (B) is in the form of filler component species (B'), which each have carbonate, hydrogen carbonate, sulphate, and/or hydrogen sulphate of calcium, magnesium or aluminium elements; or oxide, hydroxide or oxide hydroxides of aluminium; or mica and/or Alumosilicate and/or talc or silica.

11. Composite preparation according to claims 1 to 10, **characterised in that** the binding component (C) contains at least 60 wt.% by means of radical polymerization and/or free networking age hardening Duromer feedstock products (C), which are selected from the group consisting of ethylenically unsaturated polymers, (meth) acrylic resins, ethylenically unsaturated monomers, radical initiator, and optional extended cross-linkers.

12. Composite preparation according to claims 1 to 11, **characterised in that** the binding component (C) contains at least 90 wt.% polymer matrix product which is made up of the following components:
- (meth) acrylic resins and/or unsaturated polyester resins.
- ethylenically unsaturated monomers, preferably styrene, substituted styrenes, (meth) acrylate and/or (meth) acrylamides,.
- a radical initiator preferably as peroxide compounds
- optionally extended cross-linkers selected from di -, tri -, and higher functioning (meth) acrylates, di-, tri-and polyvinyl-substituted benzene derivatives, di, tri-and higher functioning vinyl or allyl(poly)ethers.

13. Composite which can be produced through hardening of a composite preparation according to one of claims 1 to 12.

14. Use of a composite according to claim 13 as material for a moulded part, which is preferably produced as a working form, moulded part for the sanitation area, pipe, channel, shaft, connector, segment component, plate, tile, ground segment, lining segment, wall, ceiling, artificial marble, frame, container, bottle, cup, bowl, decorations, sink, basin, tub, trough or moulding for the power road, aircraft and boat-building industry is.

15. Use of coupling additive components (A) as defined in claims 3 to 8 to improve the mechanical properties of materials having interfaces between organic polymers and inorganic materials with basic or amphoteric surface in accordance with DIN EN ISO 787-9.

## Revendications

1. Préparation composite contenant
i) 0,01 à 10,00 % en poids d'un composant additif médiateur (A),
ii) 5 à 94 % en poids d'un composant matière de charge (B), ainsi que
iii) 5 à 94 % en poids d'un composant liant (C),
le composant additif médiateur (A) présentant une structure chimique contenant les éléments structuraux D, P et E et existant selon la formule générale (I)
(I) [D]ₐP[E]_{b}
dans laquelle
les radicaux D sont identiques ou différents et représentent un radical comportant une double liaison à insaturation éthylénique, de préférence choisi dans le groupe comprenant (D-I), (D-II), (D-III) ainsi que (D-IV) 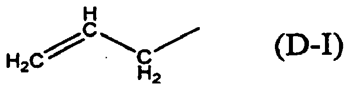 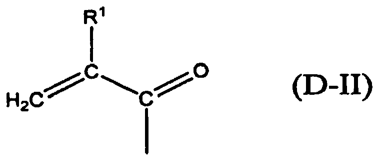 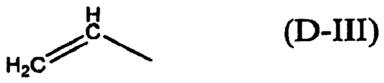 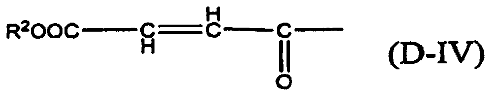 où les radicaux R¹ sont identiques ou différents et représentent un atome d'hydrogène ou CH₃ ; les radicaux R² sont identiques ou différents et représentent un atome d'hydrogène ou un radical alkyle en C₁-C₂₄ à chaîne ramifiée ou non ramifiée,
les indices a sont identiques ou différents et représentent un nombre entier de 1 à 50,
les radicaux E sont identiques ou différents et représentent un atome d'hydrogène et/ou un radical comportant un groupe COOH, de préférence choisi dans le groupe comprenant (B-I), (B-II), (B-III) ainsi que (B-IV) 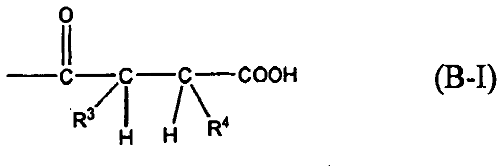 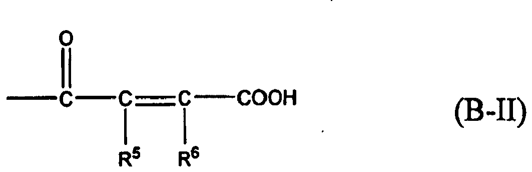 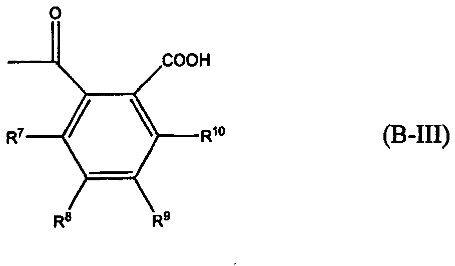
-CH₂-COOH (B-IV)
où R³ et R⁴ sont chacun identiques ou différents et représentent un atome d'hydrogène ou un radical alkyle en C₁-C₁₂ à chaîne ramifiée ou non ramifiée ; R⁵ et R⁶ sont chacun identiques ou différents et représentent un atome d'hydrogène ou un radical alkye en C₁-C₁₂ à chaîne ramifiée ou non ramifiée ; R⁷, R⁸, R⁹ et R¹⁰ sont chacun identiques ou différents et représentent un atome d'hydrogène, COOH ou un radical alkyle en C₁-C₁₂ à chaîne ramifiée ou non ramifiée,
les indices b sont identiques ou différents et représentent un nombre entier de 1 à 50,
les radicaux P sont identiques ou différents et représentent un radical principal organique à chaîne ramifiée ou non ramifiée, qui contient au moins deux atomes d'oxygène d'éther en position non terminale à l'intérieur de ce radical principal,
le radical principal organique représentant P comprenant en outre des atomes d'oxygène terminaux, chacun des éléments structuraux D et E étant directement lié à ces atomes d'oxygène terminaux, et au plus 70 % en moles des éléments structuraux totaux E qui se trouvent dans la structure chimique selon la formule générale (I) représentant des atomes d'hydrogène.

2. Préparation composite selon la revendication 1, contenant
i) 0,1 à 4,0 % en poids du composant additif médiateur (A),
ii) 15 à 84 % en poids du composant matière de charge (B), ainsi que
iii) 15 à 84 % en poids du composant liant (C).

3. Préparation composite selon la revendication 1 ou 2, **caractérisée en ce que** dans la formule générale (I) qui décrit la structure chimique du composant additif médiateur (A),
D est présent de préférence en tant que (D-II) et/ou (D-IV), a est représenté par un nombre entier de 1 à 8, le radical comportant le groupe COOH est présent de préférence en tant que (B-I) et/ou (B-II), b est représenté par un nombre entier de 1 à 15, au maximum 50, de préférence au maximum 30, d'une manière particulièrement préférée au maximum 15 % en moles des éléments structuraux totaux E qui se trouvent dans la structure chimique selon la formule générale (I) représentent des atomes d'hydrogène, et le radical principal organique représentant P présente une masse moléculaire d'au moins 200, et au moins deux des atomes d'oxygène d'éther en position non terminale à l'intérieur du radical principal sont liés l'un à l'autre par l'intermédiaire d'un segment de groupe alkylène en C₂-C₅ linéaire de pontage d'un groupe alkylène à chaîne ramifiée ou non ramifiée.

4. Préparation composite selon l'une des revendications 1 à 3, **caractérisée en ce que** la quantité totale ou une quantité partielle du composant additif médiateur (A) se présente sous la forme de composés (A') dans lesquels le radical principal organique représentant l'élément structural P comprend des motifs structuraux qui peuvent être obtenus par une polymérisation par ouverture des cycles d'éthers cycliques contenant 3 à 6 atomes nucléaires, le radical principal organique présentant de plus en option des motifs structuraux supplémentaires qui peuvent être préparés par une polymérisation par ouverture des cycles de lactones contenant 5 à 7 atomes de cycle.

5. Préparation composite selon la revendication 4, **caractérisée en ce que** les composés (A') comprennent chacun des segments structuraux de formule générale (II) 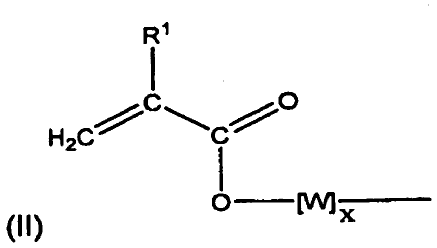 dans laquelle
les radicaux R¹ sont identiques ou différents et représentent H ou CH₃, les radicaux W sont identiques ou différents et représentent un motif structural répétitif,
les indices x sont identiques ou différents et représentent un nombre entier de 3 à 100,
où le motif structural répétitif W peut être obtenu par polymérisation par ouverture des cycles d'un éther cyclique choisi dans le groupe comprenant (W-I), (W-II), (W-III), (W-IV) ainsi que (W-V) 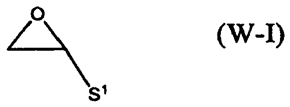 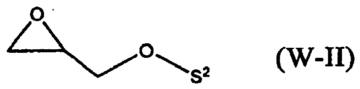 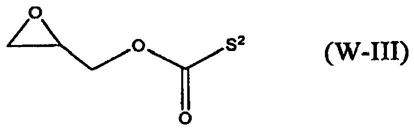 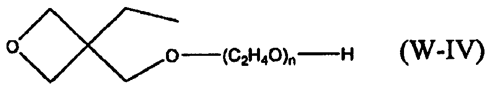 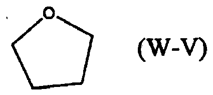 où
les radicaux S¹ sont identiques ou différents et représentent H, un radical alkyle en C₁ à C₂₄ à chaîne droite ou ramifiée, un radical aryle en C₆ à C₁₈, ou un radical arylalkyle en C₆ à C₁₈, et représentent de préférence H, CH₃, C₂H₅ ou C₆H₅,
les radicaux S² sont identiques ou différents et représentent H, un radical alkyle en C₁ à C₂₄ à chaîne droite ou ramifiée, un radical aryle en C₆ à C₁₈ ou un radical arylalkyle en C₆ à C₁₈, et représentent de préférence H, un radical alkyle en C₉ à C₁₈ ou C₆H₅,
les indices n sont identiques ou différents et représentent un nombre entier de 0 à 10.

6. Préparation composite selon l'une des revendications 1 à 5, **caractérisée en ce que** le composant additif médiateur (A) peut être préparé par un procédé comprenant les étapes i) et ii), dans lequel dans l'étape i), des précurseurs à fonctionnalité hydroxy sont produits par polymérisation par ouverture des cycles d'oxétannes en option substitués par des groupes hydroxyle, la polymérisation par ouverture des cycles étant mise en oeuvre par la réaction d'un composé à insaturation éthylénique comprenant au moins un groupe hydroxyle, et
dans l'étape ii), les précurseurs à fonctionnalité hydroxy sont mis à réagir avec des anhydrides d'acides carboxyliques cycliques.

7. Préparation composite selon l'une des revendications 1 à 6, **caractérisée en ce que** chacun des oxétannes utilisés dans l'étape i) est présent sous la forme d'oxétannes substitués par des groupes hydroxyle, **en ce qu'**on choisit pour les composés à insaturation éthylénique comprenant au moins un groupe hydroxyle, utilisés dans l'étape i), des dérivés de (méth)acrylate d'hydroxyalkyle et/ou des dérivés d'alcool allylique, et **en ce que** les anhydrides d'acides carboxyliques cycliques utilisés dans l'étape ii) se présentent sous la forme d'anhydrides d'acides carboxyliques aliphatiques cycliques contenant au moins 4 atomes de carbone.

8. Préparation composite selon la revendication 7, **caractérisée en ce que** les dérivés de (méth)acrylate d'hydroxyalkyle sont représentés par un (méth)acrylate d'hydroxyalkyle en tant que tel et/ou par une espèce d'éther pouvant être préparée par alcoxylation d'un (méth)acrylate d'hydroxyalkyle et contenant au maximum 20 motifs structuraux alcoxy, de préférence par un (méth)acrylate d'hydroxyalkyle en tant que tel, et **en ce que** les dérivés d'alcool allylique se présentent sous la forme d'alcool allylique en tant que tel, et/ou d'une espèce d'éther pouvant être préparée par alcoxylation d'un alcool allylique et contenant au maximum 20 motifs structuraux alcoxy.

9. Préparation composite selon l'une des revendications 1 à 8, **caractérisée en ce qu'**au moins 60 % en poids du composant matière de charge (B) se présente sous la forme d'une espèce de composant matière de charge (B'), dont chacune présente, selon DIN ISO 787-9, un pH d'au moins 6,0, de préférence d'au moins 7,5.

10. Préparation composite selon l'une des revendications 1 à 9, **caractérisée en ce qu'**au moins 60 % en poids du composant matière de charge (B) se présente sous la forme d'une espèce de composant matière de charge (B'), dont chacune comprend des carbonates, des hydrogénocarbonates, des sulfates et/ou des hydrogénosulfates des éléments calcium, magnésium et/ou aluminium, et/ou des oxydes, hydroxydes et/ou oxydes-hydroxydes de l'aluminium ; et/ou des micas et/ou des aluminosilicates et/ou du talc et/ou des silices.

11. Préparation composite selon l'une des revendications 1 à 10, **caractérisée en ce que** le composant liant (C) contient au moins 60 % en poids de précurseurs de composés thermodurcissables (C), pouvant durcir par polymérisation radicalaire et/ou réticulation radicalaire et qui sont choisis dans le groupe composé des polymères à insaturation éthylénique, des résines (méth)acryliques, des monomères à insaturation éthylénique, des amorceurs radicalaires et en option des agents de réticulation.

12. Préparation composite selon l'une des revendications 1 à 11, **caractérisée en ce que** le composant liant (C) contient jusqu'à au moins 90 % en poids d'un précurseur de matrice polymère qui est constitué des constituants suivants :
- des résines (méth)acryliques et/ou des résines de polyester insaturées,
- des monomères à insaturation éthylénique, de préférence du styrène, des styrènes substitués, des (méth)acrylates et/ou des (méth)acrylamides,
- des espèces pouvant être utilisées en tant qu'amorceurs radicalaires, de préférence des composés peroxydes, et
- en option des agents de réticulation choisis parmi des (méth)acrylates di-, trifonctionnels et à fonctionnalité plus élevée, des dérivés du benzène à substitution di-, tri- et polyvinyle, des vinyléthers ou allyl(poly)éthers di-, trifonctionnels ou à fonctionnalité plus élevée.

13. Composite pouvant être préparé par durcissement d'une préparation composite selon l'une des revendications 1 à 12.

14. Utilisation d'un composite selon la revendication 13 en tant que matériau pour une pièce moulée, qui de préférence se présente sous forme d'un plan de travail, d'une pièce moulée pour le domaine sanitaire, d'un tuyau, d'un conduit, d'une goulotte, d'un raccord, d'un composant de segment, d'une plaque, d'un carreau, d'un segment de sol, d'un segment de revêtement intérieur, d'une paroi, d'un plafond, de marbre artificiel, d'un cadre, d'un récipient, d'une bouteille, d'un gobelet, d'un bol, d'un article de décoration, d'un évier, d'une cuvette, d'une baignoire, d'une auge, ou d'une pièce moulée pour la construction automobile, la construction aéronautique et la construction navale.

15. Utilisation de composants additifs promoteurs (A) définis dans les revendications 3 à 8 pour améliorer les propriétés mécaniques de matériaux qui présentent des interfaces entre des polymères organiques et des matériaux inorganiques comportant des surfaces basiques ou amphotères selon DIN EN ISO 787-9.
